(19) Europäisches Patentamt
European Patent Office
Office européen des brevets

(11) **EP 1 068 704 B1**

(12) **EUROPEAN PATENT SPECIFICATION**

(45) Date of publication and mention
of the grant of the patent:
**13.06.2012 Bulletin 2012/24**

(21) Application number: **99915260.6**

(22) Date of filing: **05.04.1999**

(51) Int Cl.:
*H04L 25/03* $^{(2006.01)}$     *H04L 27/26* $^{(2006.01)}$

(86) International application number:
**PCT/US1999/007422**

(87) International publication number:
**WO 1999/052250 (14.10.1999 Gazette 1999/41)**

(54) **FILTER FOR IMPULSE RESPONSE SHORTENING, WITH ADDITIONAL SPECTRAL CONSTRAINTS, FOR MULTICARRIER TRANSMISSION**

FILTER ZUM VERKÜRZEN DER STOSSANTWORT, MIT ZUSÄTZLICHEN, SPEKTRALEN BEDINGUNGEN, FÜR MEHRTRÄGERÜBERTRAGUNG

FILTRE SERVANT A RACCOURCIR UNE REPONSE IMPULSIONNELLE ET POSSEDANT DES CONTRAINTES SPECTRALES SUPPLEMENTAIRES AFIN D'EMETTRE SUR DES PORTEUSES MULTIPLES

(84) Designated Contracting States:
**DE DK ES FI FR GB IE IT**

(30) Priority: **03.04.1998 US 54468**
**29.05.1998 US 87336 P**
**21.01.1999 US 233914**

(43) Date of publication of application:
**17.01.2001 Bulletin 2001/03**

(60) Divisional application:
**10185268.9 / 2 285 054**

(73) Proprietor: **Tellabs Operations, Inc.**
**Naperville, IL 60563 (US)**

(72) Inventors:
• **HARIKUMAR, Gopal**
**South Bend, IN 46637 (US)**
• **MARCHOK, Daniel**
**Buchanan, MI 49107 (US)**
• **RUDOFSKI, Kenneth, J.**
**Chicago, IL 60657 (US)**

(74) Representative: **Leske, Thomas et al**
**Frohwitter**
**Patentanwalt**
**Postfach 86 03 68**
**81630 München (DE)**

(56) References cited:
**EP-A- 0 768 778     WO-A-93/26096**
**US-A- 5 521 908**

• **MELSA ET AL.: "Impulse response shortening for discrete multitone transceivers" IEEE TRANSACTIONS ON COMMUNICATIONS, vol. 44, no. 12, December 1996 (1996-12), pages 1662-1672, XP002109834 NEW YORK, US**
• **AL-DHAHIR: "Joint channel and echo impulse response shortening on digital subscriber lines" IEEE SIGNAL PROCESSING LETTERS, vol. 3, no. 10, October 1996 (1996-10), pages 280-282, XP002109835 New York, US**
• **FALCONER, MAGEE: "Adaptive channel memory truncation for maximum likelihood sequence estimation" BELL SYSTEM TECHNICAL JOURNAL, vol. 52, no. 9, November 1973 (1973-11), pages 1541-1562, XP000760950**

**Description**

Background

The invention relates to time-domain equalization in a discrete multi-tone (DMT) receiver.

Conventional single carrier modulation techniques translate data bits for transmission through a communication channel by varying the amplitude and/or phase of a single sinusoidal carrier. By contrast, DMT, which is also referred to as Orthogonal Frequency Division Multiplexing (OFDM) or Multicarrier Modulation (MCM), employs a large number of sinusoidal subcarriers, e.g., 128 or 256 subcarriers. The available bandwidth of the communication channel is divided into subchannels and each subchannel communicates a part of the data. A DMT system may employ quadrature amplitude modulation (QAM) for each of the subcarriers.

OFDM-based systems transmit blocks of information bits. The time required to transmit one such block is called the symbol period. The time domain waveform that corresponds to one such block of bits is called a symbol.

Intersymbol interference (ISI) arises from the characteristics of practical communication channels and limits the rate at which information can be transmitted through them. Specifically, communication channels typically have an Effective Discrete-Time Impulse Response (EDIR) that is greater than one sample time in length, which causes ISI. ISI is a well-known phenomenon in single-carrier communication systems and there are many techniques for reducing it. The process of such ISI reduction is called equalization. ISI is discussed, for example, in Proakis, Digital Communications, McGraw Hill, 2nd Edition, 1989.

Equalization in OFDM-based systems is achieved by a two stage process. First, at the transmitter, a Cyclic Prefix (CP) is employed by affixing an end-portion of each symbol to the beginning of the symbol. A cyclic prefix that is greater than the EDIR of the channel prevents one symbol from interfering with another. Furthermore, it also facilitates a simple method of neutralizing the time domain spread of each symbol forced by the channel. This is achieved through a simple frequency domain process in the receiver which requires one multiplication operation for each subcarrier used. The use of a Cyclic Prefix to reduce ISI is discussed, for example, in: Cimini, "Analysis and Simulation of a Digital Mobile Channel using Orthogonal Frequency Division Multiplexing," IEEE Transactions on communications, pp 665-675, July 1985; Chow, "A Discrete Multi-Tone Transceiver System for HDSL applications," IEEE Journal on Selected Areas of Communications, 9 (6): 895-908, August 1991; and "DMT Group VDSL PMD Draft Standard Proposal, "Technical Report, T1E1.4/96-329R2, ANSI 1997.

Another problem arising in conventional DMT systems is noise bleeding, which occurs when noise from one frequency band interferes with a signal whose subcarrier is in another frequency band. Noise bleeding is caused, in general, by a discrete Fourier transform (DFT) operation at the receiver. Noise bleeding is discussed in, for example, Worthen et. al., "Simulation of VDSL Test Loops, "Technical ReportT1E1.4/97-288, ANSI 1997.

In a perfectly synchronized DMT system, a signal in one frequency band does not interfere with a signal whose subcarrier is in another frequency band. However, noise from one band may interfere with other less noisy bands and render them unusable. Techniques for dealing with noise-bleeding include wavelet-based solutions. However, wavelet-based solutions are, in general, computationally intensive.

Other references dealing with time domain equalization include: Chow, J. S. and Cioffi, J. M., "A Cost-effective Maximum Likelihood Receiver for Multicarrier Systems", Proceedings of the ICC, 1992; Melsa, Peter J.W., Younce, Richard C., and Rohrs, Charles E., "Optimal Impulse Response Shortening", Proceedings of the thirtv-third Annual Allerton Conference on Communication. Control and Computing, 1995, pp. 431-438; Harikumar, Gopal and Marchok, Daniel, "Shortening the Channel Impulse Response of VDSL Loops for Multicarrier Applications", Technical report T1E1.4197-289, ANSI, 1997.

EP 0 768 778 A1 describes an arrangement in which an energy constraint is used in order to ensure that a solution for an optimal target response vector is not found which places all the received energy in unused frequency bands. WO 93/26096 describes a system in which a set of parameters is optimized for equalizing a multi-carrier data signal using an encoded, predetermined signal.

Summary

The present invention provides a method for equalizing a communication channel according to claim 1. There is further provided an impulse response shortening filter according to claim 3 and a corresponding computer program according to claim 6.

The invention provides a spectrally constrained impulse shortening filter (SCISF) a filter according to claims 3-5 being called in the following, which could be used, for example, in DMT systems. The SCISF serves two primary functions.

First, the SCISF reduces intersymbol interference (ISI) by reducing the length of the effective discrete-time impulse response (EDIR) of the communication channel. Conventional impulse shortening filters may have deep nulls in their frequency response. By contrast, the SCISF has a filter characteristic that is essentially free from undesired nulls that may attenuate or completely eliminate certain subcarriers.

Second, the SCISF reduces noise bleeding between subchannels by attenuating noisy channels in a manner that does not reduce the signal to noise ratio (SNR) in these channels, but reduces the noise power that may appear in the sidelobes of adjacent subchannels. The SCISF accomplishes these functions by applying a frequency constraint to the signal based on a desired spectral response.

In one general aspect, the invention features equalizing a channel according to claim 1.

In another general aspect, the invention features an impulse response shortening filter according to claim 3.

In another aspect, the invention features a computer program according to claim 6. a computer program according to claim 6.

The techniques described here are not limited to any particular hardware or software configuration. They may find applicability in any computing or processing environment that may be used for a communication system. The techniques may be implemented in hardware or software, or a combination of the two. Preferably, the techniques are implemented in computer programs executing on a digital signal processor that includes a processor and a storage medium readable by the processor (including volatile and non-volatile memory).

Further details of the method of claim 1 are provided by claim 2.

Further details of the filter of claim 3 are provided by claims 4 and 5.

Further details of the computer program of claim 6 are provided in claim 7.

Brief Description of the Drawings

Fig. 1 is a block diagram of a discrete multi-tone communication system.

Fig. 2 is a plot of effective discrete-time impulse response (EDIR) of a communication channel including transmit and receive filters.

Fig. 3 is a plot of the shortened EDIR due to a spectrally constrained impulse shortening filter (SCISF).

Fig. 4 is a block diagram of a SCISF.

Fig. 5 is a plot of transmit signal power, signal power at SCISF input and noise power at SCISF input.

Fig. 6 is a plot of signal and noise power at the output of the SCISF.

Fig. 7 shows the filter response of a discrete Fourier transform for one frequency band.

Fig. 8 is a plot of the desired spectral response of the SCISF, $G_d(\omega)$, versus the actual frequency response, $G(\omega)$.

Fig. 9 is a plot of signal-to-noise ratio at the output of the SCISF, the output of the DFT with the SCISF and the output of the DFT without the SCISF.

Fig. 10 is a block diagram of a system for adapting a spectrally constrained impulse shortening filter in an initial training process.

Figs. 11 and 12 are block diagrams of a system for adapting a spectrally constrained impulse shortening filter in an periodic or continuous training process.

Fig. 13 is a block diagram of a generalized adaptation system that employs frequency scaling in the feedback loop.

Fig. 14 is a block diagram of a system for adapting a spectrally constrained impulse shortening filter in an initial training process that includes frequency scaling in the feedback loop.

Figs. 15 and 16 are block diagrams of a system for adapting a spectrally constrained impulse shortening filter in an periodic or continuous training process that includes frequency scaling in the feedback loop.

Figs. 17-20 are plots of simulation results for a discrete multi-tone system.

Figs. 21-24 are plots of simulation results for a discrete multi-tone system.

Description

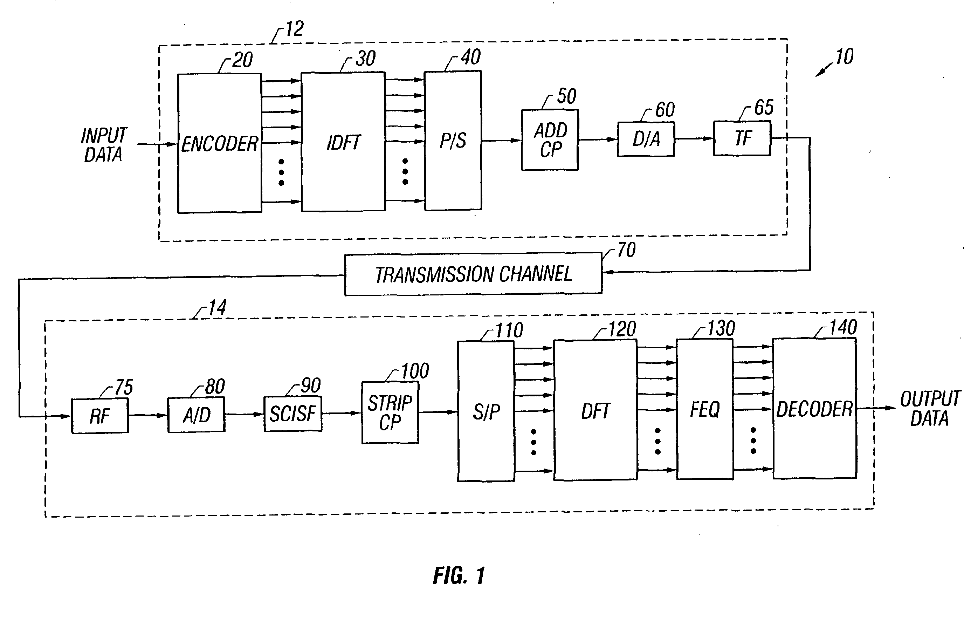

As shown in Fig. 1, a discrete multi-tone (DMT) communication system 10 has a transmitter 12 and a receiver 14. The transmitter 12 accepts an input data bit stream which passes through a constellation encoder 20. The encoder 20 divides the serial input bit stream into blocks of data. These blocks of data are further subdivided into smaller blocks corresponding to subchannels. Each of these smaller blocks are used to compute a complex value representing a constellation point. Each constellation point corresponds to a subsymbol. The subsymbols are then output by the encoder. Taken together, the subsymbols constitute a symbol.

The subsymbols are supplied to an inverse discrete Fourier transform (IDFT) 30, which may be implemented, for example, in a digital signal processor. The IDFT 30 outputs N time samples of a symbol. The time samples are processed by a parallel to serial converter 40 to form a single stream of time samples.

Following the parallel to serial converter 40, a prefix adder 50 adds a cyclic prefix to the beginning of each symbol to reduce intersymbol interference (ISI). Alternatively, the cyclic prefix may be added in the parallel to serial converter. After the cyclic prefix is added, the resulting signal passes through a digital-to-analog (D/A) converter 60 for transmission to the receiver 14 through a communication channel 70. An analog transmit filter 65 may be included following the D/A converter to band limit the transmitted signal.

At the receiver 14, the signal passes through an analog-to-digital (A/D) converter 80 and then through a spectrally constrained impulse shortening filter (SCISF) 90. A prefix stripper 100 strips the cyclic prefixes from the resulting symbols and a serial to parallel converter 110 divides the stream of time samples into parallel signal paths that form the inputs to a discrete Fourier transform (DFT) 120. The DFT 120 converts the time samples into subsymbols. A frequency domain equalization filter 130 equalizes the subsymbols. A decoder 140 converts the subsymbols into a data bits and outputs the resulting data. An analog receive filter 75 may be included prior to the A/D converter in order to band limit the received signal.

As discussed above, a cyclic prefix is added to each symbol prior to transmission through the communication channel to reduce the effects of ISI. The cyclic prefix is added by copying the last v time samples from the end of a symbol and placing them at the beginning of the symbol. To eliminate ISI, the length of the cyclic prefix, v, is chosen to be longer than the effective discrete-time impulse response (EDIR) of the channel. However, because the cyclic prefix constitutes redundant data, increasing the length of the cyclic prefix reduces the efficiency of the communication system. For example, in a system having N time samples per symbol and a cyclic prefix of v time samples, the efficiency of the system will be reduced by a factor of N/(N+v). Efficiency may be maximized either by minimizing v or maximizing N. However, increasing N increases the complexity, latency and computational requirements of the system and at some point becomes impractical. Accordingly, it is desirable to minimize v.

A spectrally constrained impulse shortening filter having an impulse response, g(n), may be employed in the receiver to minimize the length of the cyclic prefix by decreasing the EDIR of the effective communication channel, which includes the transmit and receive filters, the impulse shortening filter, and the physical transmission channel. The use of an impulse shortening filter is referred to as time domain equalization. Decreasing the EDIR allows a shorter cyclic prefix to be used without increasing ISI.

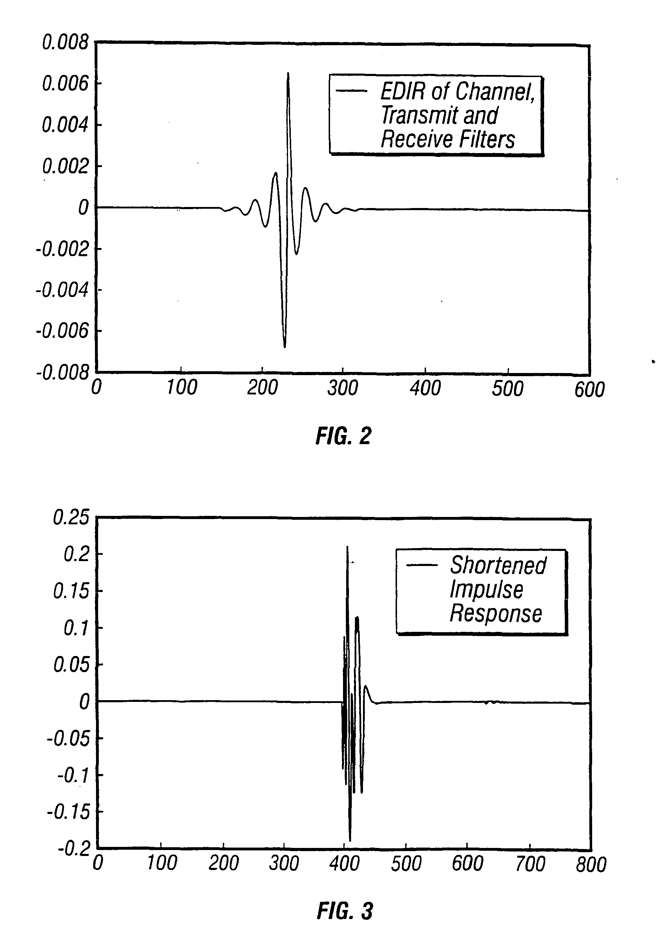

Fig. 2 is a plot of the EDIR for a DMT test configuration having a communication channel that is 4500 feet in length and operates at a sampling frequency of 11.04 MHz (test loop 4, as described in "Very-high Speed Digital Subscriber Lines: System Requirements," Technical Report T1E1.4/97-131R1, ANSI 1998). The EDIR includes the effects of a transmit filter, the communication channel and a receive filter. Fig. 3 shows the impulse response as shortened by the addition of an impulse shortening filter.

The impulse shortening filter is selected so that a significant part of the energy of the joint impulse response of the filter and the effective communication channel, $g(n)*h(n)$, is confined to a region that is shorter in length than the length of the cyclic prefix. Some prior algorithms for computing $g(n)$ considered only shortening the EDIR and did not consider the spectral characteristics of the resulting impulse shortening filter. Such filters often had deep nulls in some frequency bands, which rendered some of the corresponding subchannels useless.

Since increasing the length of the cyclic prefix reduces system efficiency, the receiver may dynamically compute an optimal length for the cyclic prefix and may send that information to the transmitter. For example, the receiver may compute a set of impulse responses for the impulse shortening filter based on a set of predetermined cyclic prefix lengths. The receiver then computes the system throughput for each particular cyclic prefix length. The length that maximizes system throughput is selected and the result of that selection is communicated to the transmitter. The transmitter then operates using the selected cyclic prefix length.

To avoid the possible attenuation of frequency bands, the spectral response of the impulse shortening filter is further required to have a spectral response that $|G(\omega)|$, meets a specified spectral constraint. A spectral constraint of the form $|G(\omega)H(\omega)|>\tau$, where $\tau$ is a threshold, is sufficient to avoid nulls in the frequency response of the impulse shortening filter. However, it is possible to compute a spectral constraint or desired spectral response, $|G_d(\omega)|$, that provides additional performance improvements, such as reducing noise bleeding between subchannels. A spectrally constrained impulse filter is configured to have a spectral response that approximates the desired spectral response.

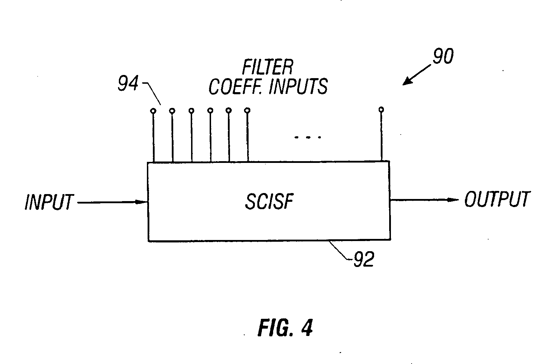

As shown in Fig. 4, the spectrally constrained impulse shortening filter (SCISF) 90 may be implemented as a time domain digital filter, which has a digital filter structure 92 with a number of taps 94 or filter coefficient inputs for adjusting the filter response. The coefficients may be computed and supplied to the taps by a digital signal processor (DSP). Alternatively, the SCISF may be implemented entirely in software, i.e., within a DSP.

A desired spectral response may be applied to a received signal using a filter that is separate from the impulse shortening or time domain equalization (TEQ) filter. For example, an analog filter may be placed prior to the A/D converter. However, the adjustability of such a filter would be limited. As a further example, a digital filter could be added prior to the TEQ filter. Both of these configurations suffer the disadvantage that the TEQ filter may distort the desired spectral characteristics of the added filter. A filter also might be positioned after the TEQ filter, which would reduce noise bleeding, but might reduce the impulse shortening provided by the TEQ filter. Accordingly, the SCISF integrates the TEQ (i.e., impulse shortening) function with the desired spectral response in a single filter.

In summary, the filter characteristic, $g(n)$, of the SCISF satisfies two conditions. First, the effective length of the convolution of the filter characteristic with the impulse response of the communication channel, $g(n)*h(n)$, is less than a target length. Second, the cost function (error function) between the desired spectral response, $G_d(\omega)$, and the actual filter spectral response, $G(\omega)$, is minimized.

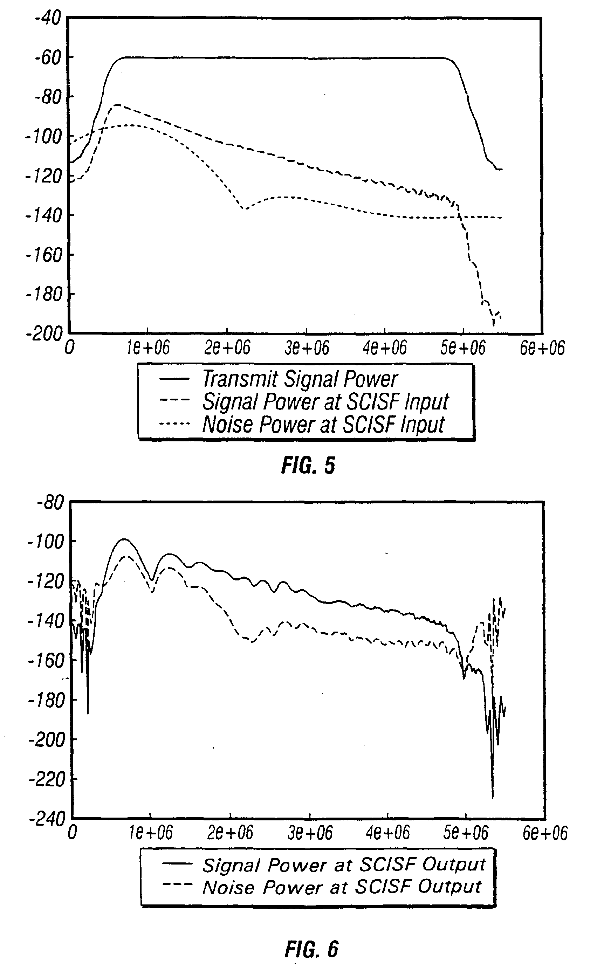

The desired spectral response is an ideal filter characteristic that is selected to maximize the data bit throughput in the subchannels of a DMT system by reducing the impact of noise. There are many sources for noise in a DMT communication system, such as near-end cross-talk (NEXT), radio frequency interference (RFI) and noise generated in the communication channel (white noise). As shown in Figs. 5 and 6, the noise spectral density is generally not uniform across the frequency band of the communication system. This non-uniformity contributes to the problem of noise bleeding, in which noise in one frequency band interfering with a signal in another frequency band.

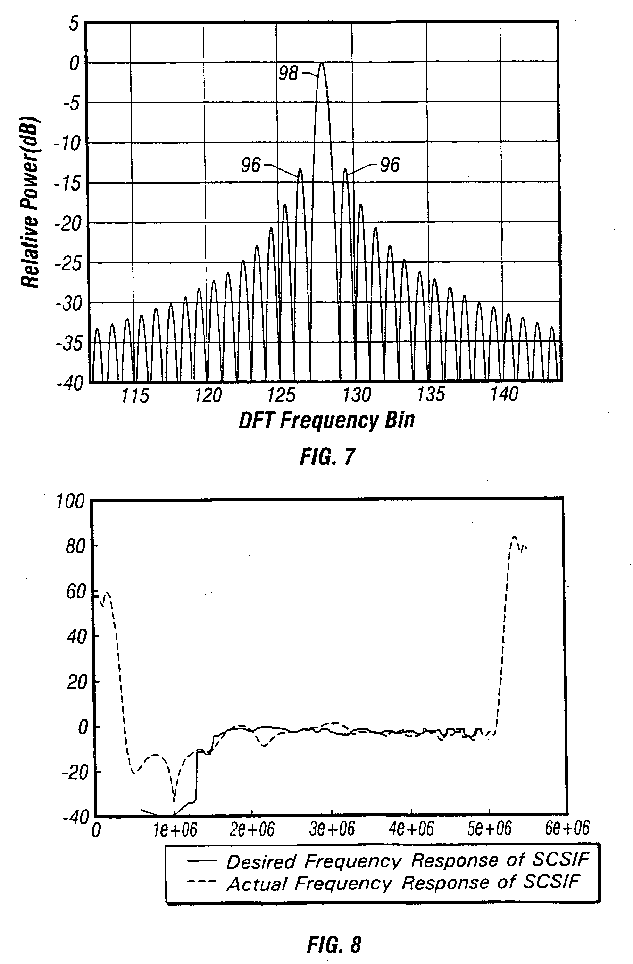

In general, noise bleeding is caused by sidelobes of filters in a DFT. Fig. 7 shows the filter response of a DFT for one frequency band or bin (i.e., bin 128). The first sidelobes (96) are only 13 dB below the main lobe (98). Therefore, noise located outside of bin 128, but within the first sidelobe of bin 128, i.e., approximately mid-way between bins 126 and 127, would appear in bin 128 with an attenuation of only 13 dB. Consequently, noisy subchannels in a DMT system may degrade the performance of non-noisy subchannels.

The desired spectral response is essentially a spectral constraint that attenuates noisy channels more than non-noisy channels. The signal and noise in the noisy channels are reduced equally, so the attenuation does not affect the signal-to-noise ratio in these channels. However, because the absolute noise level in the noisy channels is reduced, there is less noise available to enter the sidelobes of the non-noisy channels. Hence, the noise bleeding problem is minimized.

To determine the desired spectral response, the noise power spectral density (noise PSD) at the receiver must be known. The noise PSD may be determined, for example, by performing a periodigram on received data. This measurement is more complicated if a transmitter is transmitting, since the transmitted signal must be separated from the noise measurement. The noise PSD is determined by: (i) slicing the received constellation of subcarriers after the DFT to determine the nearest valid constellation point; (ii) determining an error signal based on the difference between the received constellation point and the valid constellation point; (iii) performing an IDFT on the error signal; and (iv) generating a periodigram (with windowing) from the error signals. The noise PSD may then be determined from the periodigram.

An example of a noise PSD characteristic for a DMT communication system is shown in Fig. 5 (test loop 4, as described in "Very-high Speed Digital Subscriber Lines: System Requirements," Technical Report T1E1.4/97-131R1, ANSI 1998). The transmit signal power is measured at the output of the transmit filter in the transmitter. The signal and noise PSD plots shown in Fig. 5 are measured at the input of the A/D converter in the receiver, which is prior to the SCISF.

Measured noise PSD is used by a digital signal processor (DSP) to compute a desired spectral response, $G_d(\omega)$, using the algorithm described below. Alternatively, the inverse of the noise PSD may be used as an approximation for the desired spectral response. A spectral response, $G(\omega)$, is then determined for the SCISF that minimizes the error between the spectral response of the SCISF and the desired spectral response. A set of filter coefficients may then be generated to configure the SCISF to the determined characteristic. These calculations may be done periodically to adjust the performance of the communication system. Frequency domain equalization coefficients and symbol synchronization may also be adjusted based on these calculations.

Fig. 8 is a plot of the desired spectral response of the SCISF, $G_d(\omega)$, versus the actual frequency response, $G(\omega)$. The difference between the responses is only a few dB. Fig. 6 shows the signal and noise PSD at the output of the SCISF.

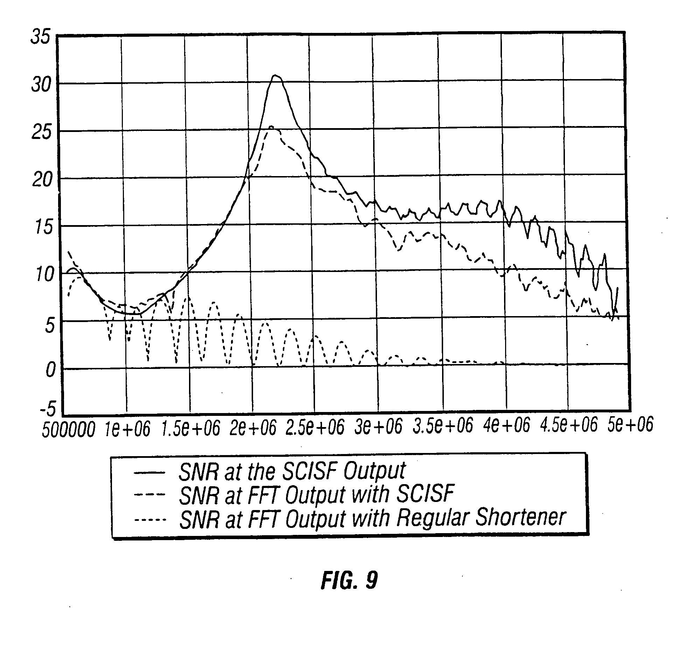

Fig. 9 shows the dramatic effect of the SCISF on system performance. Without the SCISF (i.e., using a filter that provides only impulse shortening), the signal-to-noise ratio (SNR) decreases significantly at the output of the Fourier transform (i.e., FFT or DFT) to less than about 7 dB. This decrease is due, in large part, to noise bleeding caused by the sidelobes of the Fourier transform. By contrast, with the SCISF, the SNR at the output of the Fourier transform tracks the SNR at the output of the SCISF within a few dB. Overall, the SCISF provides an improvement in SNR.

The desired spectral response of the SCISF, $G_d(\omega)$ and the actual frequency response, $G(\omega)$, are derived from an energy constraint for the SCISF, i.e., the desired spectral response must localize the energy of the effective impulse response within a desired frequency band. The energy constraint is combined with a desired spectral response based on the measured noise power spectral density. The resulting cost function (or error function) is then minimized to obtain a practical filter characteristic for the SCISF. This process is presented in detail below.

In the following derivation, all vectors are column vectors by default. Vectors are denoted by bold lower case letters (e.g., **t**). The size $m_t$ of a vector **t**, is written $\mathbf{t}(m_t)$. The components of a vector are denoted by lower case letters, e.g., $\mathbf{t}(m_t) = [t_0 \cdots t_{m_t-1}]^T$. The convolution of length $m_t + m_h - 1$ of vectors $t(m_t)$ and $h(m_h)$ is denoted $\mathbf{t*h}$. The Toeplitz matrix of a vector $\mathbf{t}(m_t)$, $\mathbf{t}_{(m:n)} \triangleq [t_m \cdots t_n]^T$, is written $\mathbf{T}^{m_x}_{(m:n)}$, and $\mathbf{T}^{m_x}_{(m:n)} \mathbf{x} = (\mathbf{t*x})_{(m:n)}$. The Discrete Time Fourier Transform (DTFT) of a vector t may be represented as:

$$T(\omega) = \sum_{n=0}^{m_t-1} t_n e^{-j\omega n} . \qquad (1)$$

The EDIR of the channel and the impulse response of the SCISF are expressed as $\mathbf{h}(m_h)$ and $g(m_g)$, respectively. The cyclic prefix has a length of $m_c$ per symbol. The energy of the effective impulse response must be localized to a contiguous region of target length $m_t$, where $m_t < m_c$, while satisfying a spectral constraint. The energy criterion to be satisfied by the SCISF may be written as:

$$\frac{\left\| (\mathbf{g} * \mathbf{h})_{(m:m+m_t-1)} \right\|^2}{\left\| (\mathbf{g} * \mathbf{h}) \right\|^2} \geq \alpha \qquad (2)$$

for some $0 \leq m \leq m_g + m_h - 2$ and some $0 < a < 1$. Defining the set $S^m$ as

$$s^m = \left\{ \mathbf{g} \in \mathrm{R}^{m_g} : \frac{\left\| (\mathbf{g} * \mathbf{h})_{(m:m+m_t-1)} \right\|^2}{\left\| (\mathbf{g} * \mathbf{h}) \right\|^2} \geq \alpha \right\} \qquad (3)$$

the impulse response of the SCISF must belong to $S^m$ for some $m$.

Let $\omega_1, ..., \omega_N$ be the location of the sub-carriers in the frequency domain. The spectral constraint may be applied by selecting $g \in S^m$, so that the cost function

$$J(\mathbf{g}) \overset{\Delta}{=} \sum_{i=1}^{N} \left( \left| G(\omega_i) \right| - G_d(\omega_i) \right)^2 \qquad (4)$$

is minimized for the desired spectral response $G_d(\omega)$.

Typically, this optimization would have to be repeated for all possible $m$ to select the filter impulse response, **g,** that achieves the lowest possible value of $J$. However, as discussed below, optimization may be limited to a few well chosen values of $m$.

The determination of the filter impulse response may be done in two stages. First, the desired magnitude frequency response $G_d(\omega)$ of the impulse shortening filter g over the bins used by the DMT system is obtained. Second, $J$ is optimized over $S^m$ for a specific value of $m$.

To determine the desired spectral response $G_d(\omega)$, it is necessary to use expressions for the signal to noise ratios observed in the various frequency bins at the output of the DFT in the receiver. The DMT system has $M$ tones (subcarriers), $N$ of which (those from $M_1$ through $M_2$) are used, and the communication channel has an analog frequency response $H_c(f)$. The analog noise power spectral density observed at the input of the receiver A/D is $s_\eta(f)$. Prior to conversion in the A/D converter, the received analog signal may be filtered by an anti-aliasing filter with transfer function $H_a(f)$. The EDIR in the absence of the impulse shortening filter is $h(n)$. After the A/D converter, the signal is fed into the impulse shortening filter with an impulse response of $g(n)$. The impulse shortening filter ensures that $(h(n)*g(n))$ is shorter in length than the cyclic prefix. $G(\omega)$ is the discrete time Fourier transform of $g(n)$. Under these conditions, the expected signal energy $\mu(k)$ observed in bin $k$ at the output of the length-$2M$ receiver DFT is given by:

$$\mu(k) = C_1 D_k \left| H\left(\frac{\pi k}{M}\right) \right|^2 \left| G\left(\frac{\pi k}{M}\right) \right|^2 \; ; \quad H(\omega) = H_c\left(\frac{\omega}{2\pi T}\right) H_a\left(\frac{\omega}{2\pi T}\right) \qquad (5)$$

where $C_1$ is a constant, $1/T$ the sampling frequency and $D_k$ the transmitted power in bin k. The noise power $\eta(k)$ in bin $k$ is:

$$\eta(k) = C_2 \left[ S_\eta\left(\frac{\omega}{2\pi T}\right) |G(\omega)|^2 \left|H_a\left(\frac{\omega}{2\pi T}\right)\right|^2 \right] * \left[ \frac{\sin^2(M\omega)}{\sin^2\left(\frac{\omega}{2}\right)} \right]\Bigg|_{\omega=\frac{\pi k}{M}} \tag{6}$$

where $C_2$ is another constant and * denotes the convolution. Assuming that the noise in the bands corresponding to unused tones is sufficiently attenuated by the anti-alias filter, $\eta(k)$ is approximately equal to:

$$\eta(k) \approx C_3 \sum_{l=M_1}^{M_2} S_\eta\left(\frac{l}{2MT}\right) \left|G\left(\frac{\pi l}{M}\right)\right|^2 \left|H_a\left(\frac{l}{2MT}\right)\right|^2 (\alpha(k-l) + \alpha(2M-k-l)), \tag{7}$$

where $\alpha(n)$ is defined as:

$$\alpha(n) = \int_{-\frac{\pi}{2M}}^{\frac{\pi}{2M}} \left[ \frac{\sin^2\left(M\left(\frac{\pi n}{M} - \lambda\right)\right)}{\sin^2\left(\frac{1}{2}\left(\frac{\pi n}{M} - \lambda\right)\right)} \right] d\lambda, \tag{8}$$

$M_1 \ldots M_2$ are the used tones and $C_3$ another constant. Defining $\mathbf{x}$ to be the vector of frequency magnitudes to be solved for as:

$$\mathbf{x} \overset{\Delta}{=} \begin{bmatrix} \left|G\left(\frac{\pi M_1}{M}\right)\right|^2 \\ \vdots \\ \left|G\left(\frac{\pi M_2}{M}\right)\right|^2 \end{bmatrix}, \tag{9}$$

the SNR in bin $k$ can be seen to be of the form $\dfrac{b_k x_k}{a_k^T \mathbf{x}}$, in which $b_k$ are scalars and $\mathbf{a}_k$ are vectors.

To determine the desired spectral response, $\mathbf{x}$ is chosen to maximize the bit throughput. Approximating the capacity of bin $k$ by $\sqrt{\mathrm{SNR}(k)}$, the optimal spectral profile is obtained by minimizing the cost function $F$, where:

$$F(\mathbf{x}) = -\sum_{k=M_1}^{M_2} \sqrt{\frac{b_k x_k}{a_k^T \mathbf{x}}}. \tag{10}$$

This minimization is performed over:

$$X = \left\{ \mathbf{x} \in \mathrm{R}^N : \|\mathbf{x}\| = 1, \quad x_i \geq 0, \quad 1 \leq i \leq N \right. \tag{11}$$

and can be accomplished by any one of a variety of constrained optimization strategies, as discussed in Bertsekas, <u>Nonlinear Programming</u>, Athena Scientific, Belmont, MA, 1995. A median filter may be applied to the output of the optimization algorithm to smooth the resulting desired spectral response.

Let $\mathbf{A} \overset{\Delta}{=} \mathbf{H}_{(0:m_h + m_g - 2)}^{m_g}$ and $\mathbf{B} \overset{\Delta}{=} \mathbf{H}_{(m:m+m_l-1)}^{m_g}$. The energy constraint in equation (3) can be written as:

$$S^m = \left\{ \mathbf{g} \in R^{m_g} : \frac{\mathbf{g}^T \mathbf{B}^T \mathbf{B} \mathbf{g}}{\mathbf{g}^T \mathbf{A}^T \mathbf{A} \mathbf{g}} \geq \alpha \right\}. \tag{12}$$

Matrix A has full column rank, since it corresponds to a full convolution, so $\mathbf{R}_A \underline{\triangleq} \mathbf{A}^T \mathbf{A}$ is invertible. Let $\mathbf{R}_B \underline{\triangleq} \mathbf{B}^T \mathbf{B}$. Defining $\mathbf{q} = \mathbf{R}_A^{0.5} \mathbf{h}$, where $\mathbf{R}_A^{0.5}$ is the square root of the positive definite matrix $\mathbf{R}_A$, the energy constraint set can be written in terms of $\mathbf{q}$ as:

$$Q \underline{\triangleq} \left\{ \mathbf{q} \in R^{m_g} : \frac{\mathbf{q}^T \mathbf{R}_A^{-0.5} \mathbf{R}_B \mathbf{R}_A^{-0.5} \mathbf{q}}{\mathbf{q}^T \mathbf{q}} \geq \alpha \right\}. \tag{13}$$

The next step is to reduce the dimensionality, i.e., the number of variables to search over in the optimization process. For example, in a video digital subscriber line(VDSL) application, an impulse shortening filter having a few hundred taps may be required. Searching over a variable space so large is difficult and impractical. Instead, the optimization is performed by searching over a cleverly chosen lower-dimensional subset of the variable space. This simplification in the optimization process may be done without significant reduction in the performance of the communication system.

The reduction in dimensionality is accomplished by a transformation of variables. Let $\mathbf{C} \underline{\triangleq} \mathbf{R}_A^{-0.5} \mathbf{R}_B \mathbf{R}_A^{-0.5}$. Let $S = U\Sigma U^T$ be the singular-value decomposition of $\mathbf{C}$, where $\Sigma$ is a diagonal matrix whose $(i, i)$th element is $\sigma_i$, and where the $\sigma_i$ are arranged in descending order. If $\sigma_1 < \alpha$, there is no feasible solution corresponding to delay $m$. If $\sigma_1 \geq \alpha$, let

$$U = \begin{bmatrix} U_1 & U_2 \end{bmatrix} \quad \Sigma = \begin{bmatrix} \Sigma_1 & 0 \\ 0 & \Sigma_2 \end{bmatrix}, \tag{14}$$

where $U_1$ has size $(m_g, m_d)$ and $\Sigma_1$ has size $(m_d, m_d)$ for some $m_d$. These equations define the dimension of the range space of the matrix $\mathbf{U_1}$, over which the search is confined. The dimension $m_d$ may be chosen either to include all $\sigma_i$ greater than some threshold $\beta$, $\beta < \alpha$, or $m_d$ may be a fixed number. Simulations indicate that $m_d$ can be less than $m_g$ by more than an order of magnitude without significantly affecting communication system performance.

The dimensionality reduction is achieved by a further transformation of variables: $q = U_1 v$. The energy constraint set now becomes:

$$V \underline{\triangleq} \left\{ \mathbf{v} \in R^{m_d} : \frac{\mathbf{v}^T \Sigma_1 \mathbf{v}}{\mathbf{v}^T \mathbf{v}} \geq \alpha \right\} = \left\{ \mathbf{v} \in R^{m_d} : \mathbf{v} \neq 0, \alpha \|\mathbf{v}\|^2 - \mathbf{v}^T \Sigma_1 \mathbf{v} \leq 0 \right. \tag{15}$$

using the identity $\mathbf{U}_1^T \mathbf{C} \mathbf{U}_1 = \Sigma_1$.

Next, the cost function is expressed in terms of $\mathbf{v}$. For a particular $\mathbf{v}$, the corresponding $\mathbf{g}$ is given by $\mathbf{g} = \mathbf{R}_A^{-0.5} \mathbf{U}_1 \mathbf{v}$, , which leads to:

$$
\begin{bmatrix} G(\omega_1) \\ \vdots \\ G(\omega_N) \end{bmatrix} = \mathbf{Fg}; \quad \mathbf{F} = \begin{bmatrix} 1 & e^{-j\omega_1} & e^{-j2\omega_1} & \dots & e^{-j(m_g-1)\omega_1} \\ \vdots & \vdots & \vdots & \vdots & \vdots \\ 1 & e^{-j\omega_1} & e^{-j2\omega_N} & \dots & e^{-j(m_g-1)\omega_N} \end{bmatrix} \tag{16}
$$

Let $\mathbf{D} \underline{\Delta} \mathbf{FAR}_A^{-0.5}\mathbf{U}_1$. Let $\mathbf{D}^R \underline{\Delta} \mathbf{real}(D)$ real $(D)$ and $\mathbf{D}^I \underline{\Delta} \mathbf{imag}(D)$. $D^R$ and $D^I$ are real matrices of size $(N, m_d)$. Let $\mathbf{d}_{R,n}^T$, $1 \leq n \leq N$ and $\mathbf{d}_{I,n}^T$, $1 \leq n \leq N$ be the rows of $D^R$ and $D^I$, respectively. Then:

$$
|G(\omega_n)| = \sqrt{\left(\mathbf{d}_{R,n}^T\mathbf{v}\right)^2 + \left(\mathbf{d}_{I,n}^T\mathbf{v}\right)^2}
$$
$$
= \sqrt{\mathbf{v}^T\left(\mathbf{d}_{R,n}\mathbf{d}_{R,n}^T + \mathbf{d}_{I,n}\mathbf{d}_{I,n}^T\right)\mathbf{v}} = \sqrt{\mathbf{v}^T\mathbf{T}_n\mathbf{v}}
$$

where $\Gamma_n \underline{\Delta} \mathbf{d}_{R,n}\mathbf{d}_{R,n}^T + \mathbf{d}_{I,n}\mathbf{d}_{I,n}^T$. These definitions result in:

$$
J_o(\mathbf{v}) \underline{\Delta} j(g(\mathbf{v})) = \sum_{n=1}^{N}\left(\sqrt{\mathbf{v}^T\Gamma_n\mathbf{v}} - G_d(\omega_n)\right)^2 \tag{17}
$$

The gradient and Hessian of $J_o$ are:

$$
\nabla_{J_o}(\mathbf{v}) = \sum_{n=1}^{N}2\left(1 - \frac{G_d(\omega_n)}{\sqrt{\mathbf{v}^T\Gamma_n\mathbf{v}}}\right)\Gamma_n\mathbf{v} \tag{18}
$$

$$
\mathrm{H}_{J_o}(\mathbf{v}) = \sum_{n=1}^{N}2\left[\left(1 - \frac{G_d(\omega_n)}{\sqrt{\mathbf{v}^T\Gamma_n\mathbf{v}}}\right)\Gamma_n + \frac{G_d(\omega_n)}{\left(\sqrt{\mathbf{v}^T\Gamma_n\mathbf{v}}\right)^3}\Gamma_n\mathbf{v}\mathbf{v}^T\Gamma_n\right] \tag{19}
$$

The projection $\mathbf{P}_V(\mathbf{y})$ of any $\mathbf{y} \in R^m d$ on to $V$ is defined to be

$$
P_V(y) \overset{\Delta}{=} \arg\min_{\mathbf{v}\in V}\|\mathbf{y} - \mathbf{v}\|^2 \tag{20}
$$

To develop an algorithm to optimize the cost function $J_o$ over $V$, an expression must be derived for $\mathbf{P}_V(\mathbf{y})$. There is no closed-form expression for this projection operator, however there is a very efficient algorithm to compute it. If $y \in V$, $P_V(y) = y$. If not, the projection onto $V$ is the same as the projection on to its boundary, defined by:

$$\text{boundary } (V) \underline{\Delta} \left\{ \mathbf{v} \in \mathrm{R}^{m_d} : \mathbf{v} \neq 0, \, \alpha \|\mathbf{v}\|^2 - \mathbf{v}^T \Sigma_1 \mathbf{v} = 0 \right. \tag{21}$$

The latter may be accomplished using LaGrange multipliers as follows. Defining a modified cost function S as:

$$S(\mathbf{v}) \underline{\Delta} \|\mathbf{y} - \mathbf{v}\|^2 + \mu \left( \alpha \|\mathbf{v}\|^2 - \mathbf{v}^T \Sigma_1 \mathbf{v} \right) \tag{22}$$

The equation $\nabla_S(\mathbf{v}) = 0$ must be solved on the boundary of $V$. This reduces to the following simultaneous equations:

$$\left[ (1 + \mu\alpha)\mathbf{I} - \mu\Sigma_1 \right]\mathbf{v} = 0 \tag{23}$$

$$\alpha\|\mathbf{v}\|^2 - \mathbf{v}^T \Sigma_1 \mathbf{v} = 0 \tag{24}$$

Solving for v in terms of $\mu$ from (23) and substituting in (24), the following equation is obtained for $\mu$:

$$\mathbf{y}^T diag\left( \frac{\alpha - \sigma_i}{\left[ 1 + \mu(\alpha - \sigma_i) \right]^2} \right) \mathbf{y} = 0 \tag{25}$$

Equation (25) may be written as a polynomial equation of order $2m_d$ in $\mu$. The polynomial equation must be solved for the real and positive roots, which may be done using one of the variety of efficient root-finding algorithms in the literature. One of the real, positive roots must be chosen by enumeration so that, when substituted into the expression for v, it leads to the smallest $\|\mathbf{y} - \mathbf{v}\|^2$.

Since the gradient and Hessian of the cost function $J_o$ and the projection operator onto $V$ are available, the optimization can be done very efficiently. For example, the penalty method may be used, as described in Bertsekas, Nonlinear Programming, Athena Scientific, Belmont, MA, 1995, or an iterative strategy consisting of gradient descent followed by projection onto $V$. Both techniques have been tested and perform well.

The SCISF may be configured, by determining the filter coefficients during a training or adaptation period. The SCISF filters the output $\{y_k\}$ of the receiver A/D 80. The coefficients are selected using an algorithm that minimizes the squared error between a reference sequence $\{u_k\}$ generated by the receiver and the output of the SCISF $\{\hat{u}_k\}$. The SCISF may be a finite impulse response (FIR) filter or an infinite impulse response (IIR) filter. The SCISF may be trained following activation of the communication system or periodically during operation of the system to compensate for variations in the channel noise profile.

The training may be performed using a variation of one of the classical adaptive algorithms, such as least mean squares (LMS), normalized LMS, or recursive least squares (RLS). For example, the following algorithm is a version of the normalized LMS algorithm in which $b_0,...,b_N$ and $a_1...,a_N$ are the FIR and IIR parts of a SCISF having an impulse response, g. The z-transform G(z) is:

$$G(z) = \frac{b_0 + b_1 z^{-1} + \cdots + b_N z^{-N}}{1 - a_1 z^{-1} - \cdots - a_N z^{-N}} \tag{26}$$

The adaptation of coefficients $a_i$ and $b_i$ is defined in the following equations, in which $a_i(k)$ and $b_i(k)$ are the values of these coefficients during the $k$th iteration. The parameter $\mu$ is a predetermined constant with a value of 0.4.

$$\hat{u}_k = \sum_{i=0}^{N} b_i(k)y_{k-i} + \sum_{j=1}^{N} a_i(k)\hat{u}_{k-i} \tag{27}$$

$$\alpha_k = [b_0(k),\ldots,b_N(k)] \tag{28}$$

$$\beta_k = [a_1(k),\ldots,a_N(k)] \tag{29}$$

$$\mathrm{d}_k = [y_k, y_{k-1},\ldots,y_{k-N}] \tag{30}$$

$$\mathrm{c}_k = [\hat{u}_{k-1}, \hat{u}_{k-2},\ldots,\hat{u}_{k-N}] \tag{31}$$

$$e_k \underline{\Delta} u_k - \hat{u}_k \tag{32}$$

$$\alpha_{k+1} = \alpha_k + \mu \frac{e_k \mathrm{d}_k}{\|\mathrm{d_k}\|^2} \tag{33}$$

$$\beta_{k+1} = \beta_k + \mu \frac{e_k \mathrm{c}_k}{\|\mathrm{c_k}\|^2} \tag{34}$$

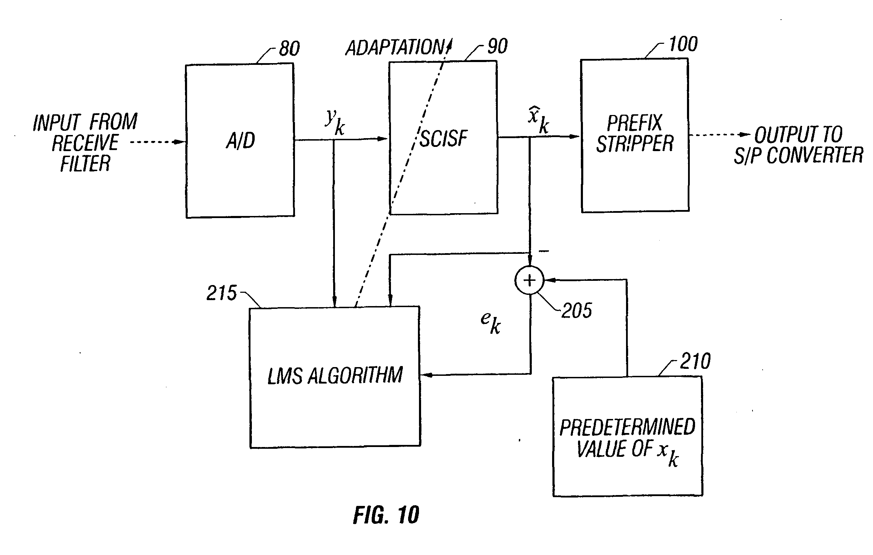

In a first example, the coefficients of the SCISF are determined during an initial training period following the activation of the communication system using the LMS algorithm described above. A predetermined sequence of bits $x_k$ is input to the transmitter 12. The sequence of bits results in a sequence of real numbers $\{x_k\}$ at the input of the D/A 60. As shown in Figs. 1 and 10, the transmitted signal is filtered and noise-corrupted by the transmission channel 70, resulting in a received sequence $\{y_k\}$ at the output of the A/D 80 in the receiver 14. The SCISF 90 filters and transforms the received sequence $\{y_k\}$ into an output sequence $\{\hat{x}_k\}$. The output sequence $\{\hat{x}_k\}$ is compared (in a signal comparator 205) to the predetermined sequence $x_k$, which is stored in memory 210 in the receiver. The comparison results in an error signal $e_k$ that is input to the LMS algorithm processor 215 along with sequence $\{\hat{x}_k\}$.

The training process determines coefficients for the SCISF so that the output $\{\hat{x}_k\}$ matches the predetermined sequence $\{x_k\}$ as closely as possible in a least squares sense, i.e., the mean square error between the output and the predetermined sequence is minimized. During the training process, the coefficients of the SCISF converge to values that enable the SCISF to reduce ISI and additive noise. The resulting SCISF matches $P_1(\omega)$ in the frequency domain in a least squares sense, where:

$$P_1(\omega) = \frac{S_x(\omega)H^*(\omega)}{S_x(\omega)|H(\omega)|^2 + S_\eta(\omega)} \tag{35}$$

In the equation above, $S_x(\omega)$ is the power-spectral density at the input of the transmitter D/A 60, $S_\eta(\omega)$ is the power spectral density of the additive noise at the output of the A/D 80, and $H(\omega)$ is the frequency response of the effective discrete-time impulse response (EDIR) of the transmission channel 70, transmit filter 65, and receive filter 75 measured between the input of the transmitter D/A 60 and the output of the receiver A/D 80.

Upon completion of the initial training of the SCISF, the SCISF coefficients are fixed and the frequency domain equalizer (FEQ 130) of the receiver is trained using standard techniques for DMT receivers. Following the training of the FEQ, the SCISF can be periodically trained or adapted during operation of the communication system. Since it is not efficient to repeatedly transmit a predetermined bit sequence during operation of the communication system, the periodic training process uses transmitted communication data to generate the reference and output sequences, as described below.

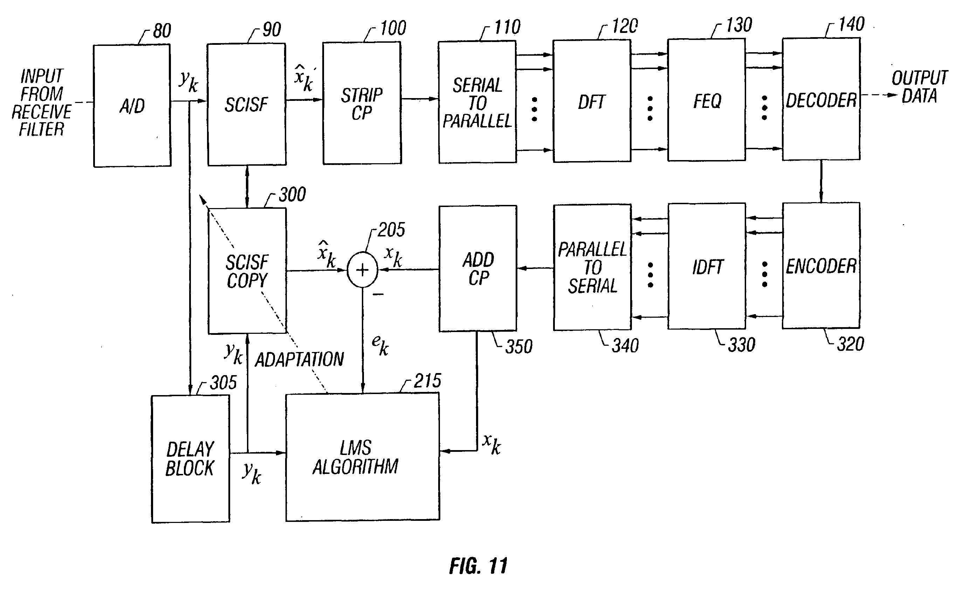

During operation of the communication system, a sequence of communication data bits $x_k$ is input to the transmitter 12 (see Fig. 1). The sequence of data bits results in a sequence of real numbers $\{x_k\}$ at the input of the D/A 60. As shown in Figs. 1 and 11, the transmitted signal is filtered and noise-corrupted by the transmission channel 70, resulting in a received sequence $\{y_k\}$ at the output of the A/D 80 in the receiver 14. The SCISF 90 filters and transforms the received sequence $\{y_k\}$ into an output sequence $\{\hat{x}'_k\}$.

The received sequence $\{y_k\}$ is also input to a delay 305 and then to a secondary SCISF 300 that has the same coefficients as the primary SCISF 90 following the initial training. Such a configuration allows periodic training to be performed without disruption to the operation of the communication system. The secondary SCISF 300 is periodically or continuously trained using an algorithm similar to that used for the initial training. The new coefficients of the secondary SCISF 300 are periodically copied to the primary SCISF 90.

In an initial training process, the output sequence $\{\hat{x}_k\}$ of the secondary SCISF 300 would be compared (in a signal comparator 205) to a predetermined sequence $x_k$ stored in memory. However, as discussed above, a sequence of data communication bits is used as a reference sequence for training rather than a predetermined sequence. As such, the receiver must have a way of generating a reference signal to compare to the output of the SCISF.

To compute the reference sequence, the receiver essentially duplicates the encoding and modulation processes of the transmitter using the output of the decoder 140. Because the initial training has already been performed, the SCISF 90 output $\{\hat{x}'_k\}$ matches the predetermined sequence $\{x_k\}$ closely and ISI and additive noise are minimized. Hence, the data output of the decoder 140 closely matches the transmitted sequence of communication data bits $x_k$. The data bits are input to an encoder 320, an IDFT 330, a parallel to serial converter 340, and a prefix adder 350 similar to those in the transmitter. The output sequence $\{x_k\}$ of this chain is input to the LMS algorithm processor 215 and used as a reference sequence in the training algorithm.

The output sequence $\{\hat{x}_k\}$ of the secondary SCISF 300 is compared (in a signal comparator 205) to the reference sequence $\{x_k\}$, which is output by the encoding/modulation chain (320, 330, 340 and 350). As noted above, the received sequence $\{y_k\}$ passes through a delay 305 before being input to the secondary SCISF 300. The delay 305 compensates for the processing delay in the demodulation/decoding chain and the encoding/modulation chain. The comparison results in an error signal $e_k$ that is input to the LMS algorithm processor 215. The training process determines coefficients for the secondary SCISF 300 so that the output $\{\hat{x}_k\}$ matches the reference sequence $\{x_k\}$ as closely as possible in a least squares sense, i.e., the mean square error between the output and the reference sequence is minimized. Periodically, the coefficients of the secondary SCISF 300 are copied to the primary SCISF 90.

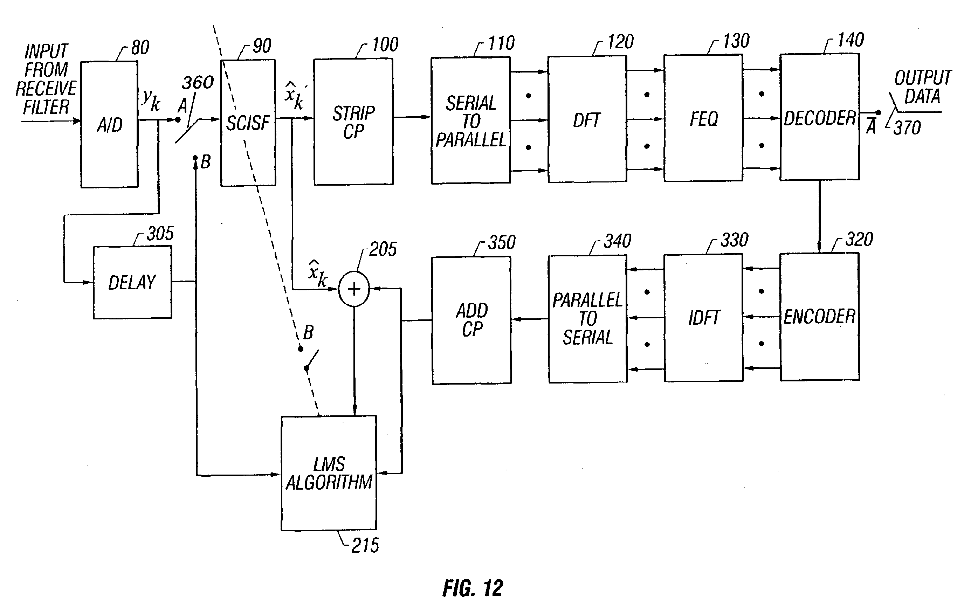

An another example, as shown in Fig. 12, the periodic training may be performed with a single SCISF 90. In this configuration, a received sequence $\{y_k\}$ is output by the A/D 80 in the receiver 14. The SCISF 90 filters and transforms the received sequence $\{y_k\}$ into an output sequence $\{\hat{x}'_k\}$. The received sequence $\{y_k\}$ is also input to a delay 305. After the received sequence $\{y_k\}$ passes through the SCISF 90, a data switch 360 is changed from position A to position B, allowing the delayed received sequence to make a second pass through the SCISF 90. An output switch 370 also may be opened, so that data is not output during the training process. In addition, the SCISF coefficients are controlled by the LMS algorithm during the training process.

A reference sequence is computed as in the configuration of Fig. 11. The data bits are input to an encoder 320, an IDFT 330, a parallel to serial converter 340, and a prefix adder 350. The resulting reference sequence $\{x_k\}$ is input to the LMS algorithm processor.

The output sequence $\{\hat{x}_k\}$ of the second pass through the SCISF 90 is compared (in signal comparator 205) to the reference sequence. As noted above, the received sequence $\{y_k\}$ passes through a delay 305 before being input to the SCISF 90 for the second pass. The delay 305 compensates for the processing delay in the demodulation/decoding chain and the encoding/modulation chain. The comparison results in an error signal $e_k$ that is input to the LMS algorithm processor 215. The training process determines coefficients for the SCISF 90 so that the output $\{\hat{x}_k\}$ matches the reference sequence $\{x_k\}$ as closely as possible in a least squares sense, i.e., the mean square error between the output and the reference sequence is minimized. The coefficients of the SCISF 90 then are updated to the coefficients determined in the training process.

In a second examplary embodiment, the SCISF 90 coefficients are chosen so that the frequency response of the SCISF matches a desired spectral response $G_d(\omega)$ that seeks to minimize the effects of noise-bleeding and maximize system bit throughput. The desired spectral response $G_d(\omega)$ is determined based on the signal-to-noise ratios observed in the various frequency bins of the DFT 120 in the receiver.

For example, an OFDM system may have $M$ tones, $N$ of which ($m_1$ through $m_N$) are used. The system operates over a channel with analog frequency response $H_c(f)$. Referring again to Fig. 1, the analog noise power spectral density at the input of the receiver A/D 80 is $S_\eta(f)$. Prior to receiver A/D 80, the received analog signal may be filtered by an anti-aliasing filter (i.e., receive filter 75) having a transfer function $H_a(f)$. The effective discrete-time impulse response (EDIR) of the transmission channel of the OFDM system (including the transmit filter 65 and receive filter 75) is $h(n)$. The output of the A/D 80 is input to a SCISF 90 having an impulse response $g(n)$. $G(\omega)$ is the spectral response corresponding to $g(n)$.

The expected signal energy $\mu(k)$ observed in frequency bin k at the output of the DFT120, which has a length of $NM$, is:

$$\mu(k) = C_1 D_k \left| H\left(\frac{\pi k}{M}\right) \right|^2 \left| G\left(\frac{\pi k}{M}\right) \right|^2 ; \quad H(\omega) = H_c\left(\frac{\omega}{2\pi T}\right) H_a\left(\frac{\omega}{2\pi T}\right) \tag{36}$$

where $C_1$ is a constant, 1/T is the sampling frequency and $D_k$ is the transmitted power in frequency bin k. The noise power $\eta(k)$ in bin k is:

$$\eta(k) = C_2 \left[ S_\eta\left(\frac{\omega}{2\pi T}\right) |G(\omega)|^2 \left| H_a\left(\frac{\omega}{2\pi T}\right) \right|^2 \right] * \left[ \frac{\sin^2(M\omega)}{\sin^2\left(\frac{\omega}{2}\right)} \right] \Bigg|_{\omega = \frac{\pi k}{M}} , \tag{37}$$

where $C_2$ is a constant and * denotes a convolution of the discrete Fourier transforms. If the noise in the bands occupied by unused tones is sufficiently attenuated by the anti-alias filter (receive filter 75), $\eta(k)$ is approximately:

$$\eta(k) \approx C_3 \sum_{l=M_1}^{M_2} S_\eta\left(\frac{l}{2MT}\right) \left| G\left(\frac{\pi l}{M}\right) \right|^2 \left| H_a\left(\frac{l}{2MT}\right) \right|^2 (\tau(k-l) + \tau(2M - k - l)), \tag{38}$$

where $\tau(n)$ is defined as:

$$\tau(n) = \int_{-\frac{\pi}{NM}}^{\frac{\pi}{NM}} \left[ \frac{\sin^2\left(M\left(\frac{\pi n}{M} - \lambda\right)\right)}{\sin^2\left(\frac{1}{2}\left(\frac{\pi n}{M} - \lambda\right)\right)} \right] d\lambda, \tag{39}$$

$m_1...m_N$ are the used tones, and $C_3$ is a constant. A vector of frequency magnitudes $g$ is defined as:

$$g \triangleq \begin{bmatrix} \left| G\left(\frac{\pi m_1}{M}\right) \right|^2 \\ \vdots \\ \left| G\left(\frac{\pi m_N}{M}\right) \right|^2 \end{bmatrix} = \begin{bmatrix} G_1 \\ \vdots \\ G_N \end{bmatrix} \tag{40}$$

The SNR in frequency bin $k$ is $\frac{r_k G_k}{s_k^T g}$ for scalars $r_k$ and vectors $s_k$. The scalars $r_k$ are defined by:

$$r_k \triangleq C_1 D_k \left| H\left(\frac{\pi k}{M}\right) \right|^2 \tag{41}$$

and $s_k(l)$, the $l$th component *of* $s_k$ is defined by:

$$s_k(l) = C_3 S \eta\left(\frac{l}{2MT}\right) \left| H_a\left(\frac{l}{2MT}\right) \right|^2 (\tau(k-l) + \tau(2M - k - l)) \tag{42}$$

To determine an expression for $g$ that maximizes system bit throughput, the capacity of each frequency bin $k$ is approximated by $\log(1+ SNR_k)$. Accordingly, the optimal spectral profile is determined by minimizing the cost function $F$, where:

$$F(g) = -\sum_{k=m_1}^{m_N} \log\left(1 + \frac{r_k G_k}{s_k^T g}\right) \tag{43}$$

Since $G_k = |G(\pi m_k / M)|^2$, the minimization of the cost function is performed over all positive values of $G_k$, as:

$$g_{opt} = \arg \min_{g \in G} F(g) \tag{44}$$

where:

$$G = \left\{ g \in R^N : \|g\| = 1, G_i \geq 0, 1 \leq i \leq N \right\} \tag{45}$$

A variety of constrained optimization strategies may be used to solve the above equations for $g_{opt}$.

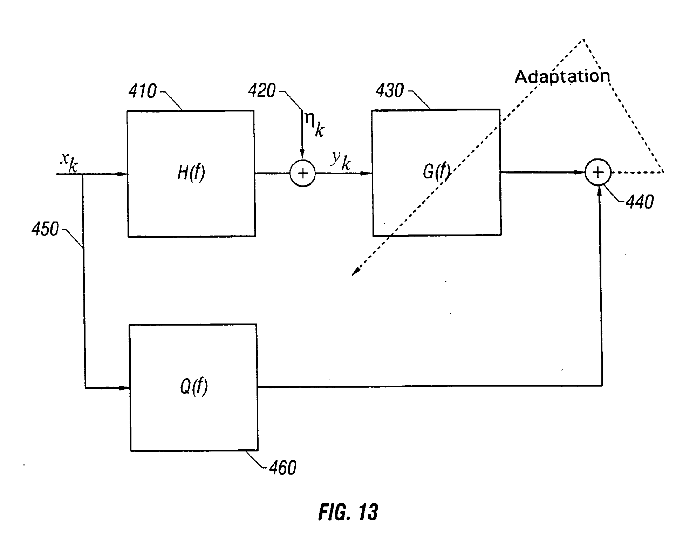

Once the optimal impulse response $g_{opt}$ and desired spectral response $G_d(\omega)$ (which may be expressed as $G_d(\pi m_k / M)$ for a system having $M$ tones) have been determined, a training process is used to adapt the SCISF 90 so that its impulse response $g$ matches the desired spectral response. As shown in Fig. 13, the training process may be generalized as a feedback system. A reference sequence $x_k$ is input to the system. This corresponds to inputting a predetermined reference bit sequence to a transmitter. The reference sequence passes through a transmission channel 410 having frequency response $H(f)$ (including the physical transmission channel and the transmit and receive filters). Additive noise $\eta_k$ from the transmission channel is represented in this general model as an external input 420 to the system. The resulting signal $y_k$ is input to a filter 430 having a frequency response $G(f)$, e.g., a SCISF. The output of the filter 430 is then passed to an adaptation processor 440, which computes an error signal based on the feedback loop 450 and adapts the filter accordingly. The adaptation processor may, for example, use the LMS algorithm described above.

The reference sequence $x_k$ is also input to the feedback loop 450, which passes the reference sequence $x_k$ through a scaling filter 460 with frequency characteristic $Q(f)$. The frequency characteristic $Q(f)$ of the scaling filter 460 (which may be expressed as a set of frequency domain scaling factors $Q_k$) is determined so that the SCISF adapts to the desired spectral response. The output of the scaling filter 460 is used a reference for the calculation of the error signal in the adaptation processor 440, as described above.

Using the general feedback system shown in Fig. 13, a SCISF having an impulse response $g$ may be trained to minimize the error $\|q * x - x * g * h - \eta * g\|^2$. The resulting filter matches $P_2(\omega)$ in the frequency domain in a least-squares sense, where:

$$P_2(\omega) = \frac{S_x(\omega)H^*(\omega)Q(\omega)}{S_x(\omega)|H(\omega)|^2 + S_\eta(\omega)}, \qquad (46)$$

$S_x(\omega)$ is the power-spectral density at the input of the system, H($\omega$) is the frequency response of the effective discrete-time impulse response (EDIR) of the transmission channel, $S_\eta$ ($\omega$) is the power spectral density of the additive noise, and $Q(\omega)$ is the spectral response of the scaling filter 460 having impulse response $q$.

The solution for $g_{opt}$ in the equations above specifies only the magnitude of the spectral response of the SCISF. If the SCISF is a FIR filter, a linear phase characteristic may be used. If the length of the SCISF is $n_g$, the desired values of $G(\omega)$ for the frequency bins of interest are:

$$G_d(\pi M_k / M) \underset{=}{\Delta} \sqrt{g_{opt}(k)}\exp\left(\frac{-j\pi M_k(n_g - 1)}{2M}\right). \qquad (47)$$

The values $Q_k$ are defined by:

$$Q_k = \frac{G_d(\pi m_k / M)\left(S_x(j\pi k / M)|H(j\pi k / M)|^2 + S_\eta(j\pi k / M)\right)}{S_\eta(j\pi k / M)H^*(j\pi k / M)} \qquad (48)$$

The values of $Q_k$ may be computed during an initial training period and may be periodically updated during operation of the communication system.

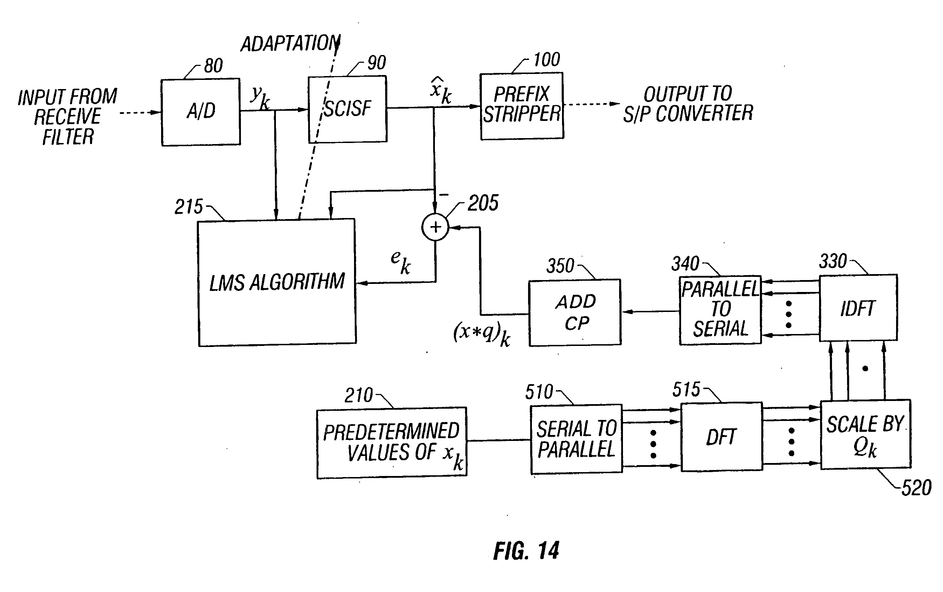

As shown in Figs. 14-16, the general feedback training process may be used to perform an initial training of a SCISF followed by periodic training analogous to the process described above with respect to Figs. 10-12. One difference between the techniques is that a scaled reference signal $(x * q)_k$ is used rather than an unscaled reference $x_k$.

Referring to Fig. 14, to perform the initial training, a predetermined sequence of bits $x_k$ is input to the transmitter. The transmitted signal is filtered and noise-corrupted by the transmission channel, resulting in a received sequence $\{y_k\}$ at the output of the A/D 80 in the receiver. The SCISF 90 filters and transforms the received sequence $\{y_k\}$ into an output sequence $\{\hat{x}_k\}$. The output sequence $\{\hat{x}_k\}$ is compared (in a signal comparator 205) to a scaled reference sequence $(x^*q)_k$.

The scaled reference sequence is computed from a copy of the predetermined sequence $x_k$ that is stored in memory 210 in the receiver. As a first step, the predetermined sequence is input to a serial to parallel converter 510 and a DFT 515. The resulting frequency domain signal is input to a scaling filter 520 which applies the set of frequency domain scaling factors $Q_k$ that causes the SCISF to adapt to the desired spectral response, as discussed above. The scaled signal is input to an inverse discrete Fourier transform 330, a parallel to serial converter 340 and a cyclic prefix adder 350, resulting in a scaled reference sequence $(x^*q)_k$. The comparison of the output sequence $\{\hat{x}_k\}$ to the scaled reference sequence $(x^*q)_k$ results in an error signal $e_k$ that is input to the LMS algorithm processor 215 along with sequence $\{\hat{x}_k\}$. Alternatively, a frequency domain reference (e.g., a predetermined bit sequence that has been processed by a serial to parallel converter and DFT) may be stored in memory in the receiver, which would eliminate the need for the serial to parallel converter and discrete Fourier transform in the feedback loop.

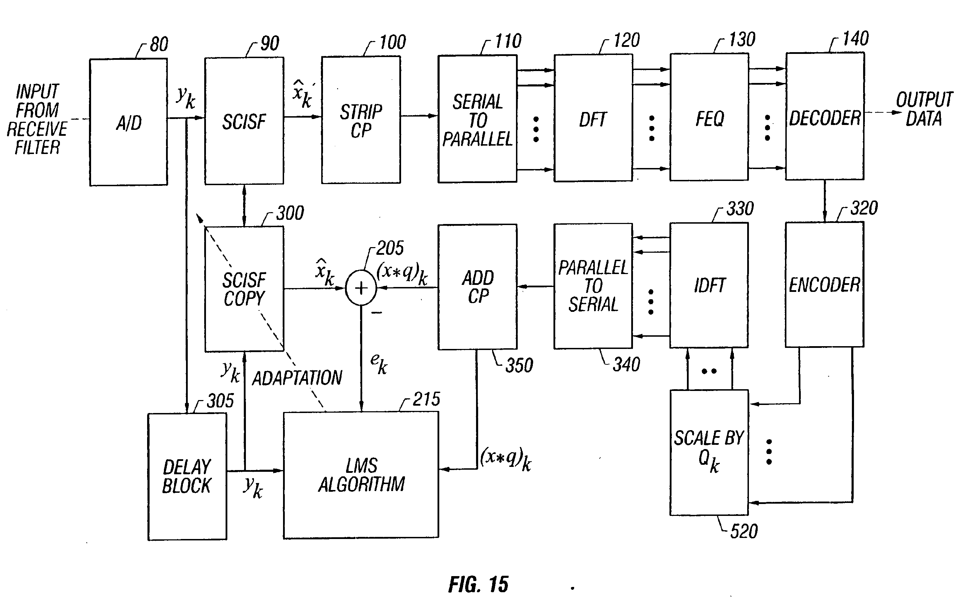

Following the initial training, the SCISF is periodically trained during operation of the communication system. A sequence of communication data bits $x_k$ is input to the transmitter. Referring to Fig. 15, the transmitted signal is filtered and noise-corrupted by the transmission channel, resulting in a received sequence $\{y_k\}$ at the output of the A/D 80 in the receiver. The SCISF 90 filters and transforms the received sequence $\{y_k\}$ into an output sequence $\{\hat{x}'_k\}$.

The received sequence $\{y_k\}$ is also input to a delay 305 and then to a secondary SCISF 300 that has the same coefficients as the primary SCISF 90 following the initial training. The secondary SCISF 300 provides output sequence $\{\hat{x}_k\}$, which is compared to a reference sequence during the periodic training process. Such a configuration allows periodic training to be performed without disruption to the operation of the communication system. The secondary SCISF 300 is periodically or continuously trained using an algorithm similar to that used for the initial training. The new coefficients of the secondary SCISF 300 are periodically copied to the primary SCISF 90.

To compute the reference sequence, the data output of the decoder 140 is input to an encoder 320. The resulting frequency domain signal is input to a scaling filter 520 which applies the set of frequency domain scaling factors $Q_k$ that causes the SCISF to adapt to the desired spectral response, as discussed above. The scaled signal is input to an inverse discrete Fourier transform 330, a parallel to serial converter 340 and a cyclic prefix adder 350, resulting in a scaled reference sequence $(x^*q)_k$. The comparison of the output sequence $\{\hat{x}_k\}$ to the scaled reference sequence $(x^*q)_k$ results in an error signal $e_k$ that is input to the LMS algorithm processor 215. The training process determines coefficients for the secondary SCISF 300 so that the output $\{\hat{x}_k\}$ matches the scaled reference sequence $(x^*q)_k$ as closely as possible in a least squares sense, i.e., the mean square error between the output and the reference sequence is minimized. Periodically, the coefficients of the secondary SCISF 300 are copied to the primary SCISF 90.

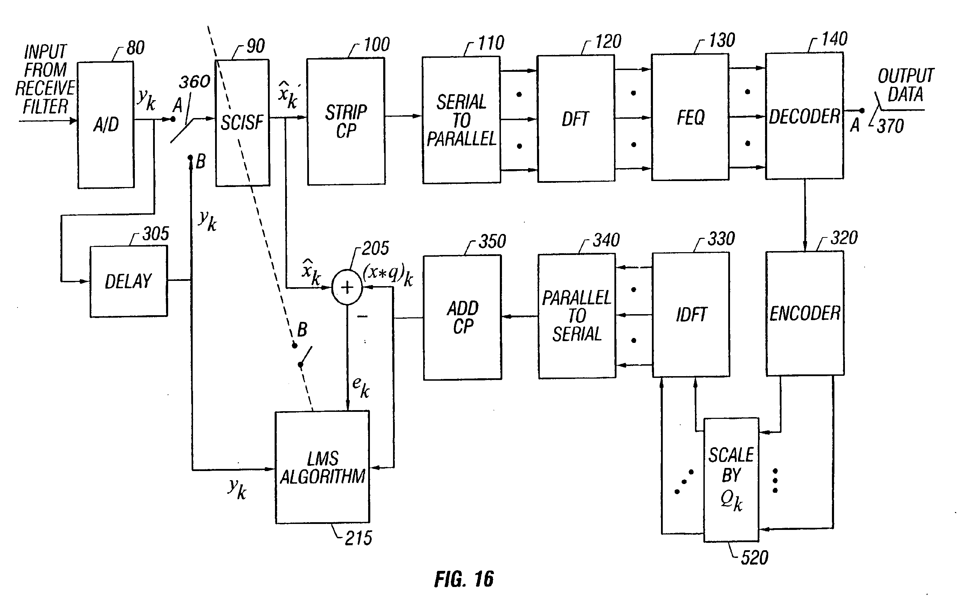

Alternatively, as shown in Fig. 16, the periodic training may be performed with a single SCISF 90. In this configuration, a received sequence $\{y_k\}$ is output by the A/D 80 in the receiver. The SCISF 90 filters and transforms the received sequence $\{y_k\}$ into an output sequence $\{\hat{x}'_k\}$. The received sequence $\{y_k\}$ is also input to a delay. After the received sequence $\{y_k\}$ passes through the SCISF 90, a data switch 360 is changed from position A to position B, allowing the delayed received sequence to make a second pass through the SCISF 90. An output switch 370 also may be opened, so that data is not output during the training process. In addition, the SCISF coefficients are controlled by the LMS algorithm during the training process.

A reference sequence is computed as in the configuration of Fig. 15. The data output of the decoder 140 is input to an encoder 320. The resulting frequency domain signal is input to a scaling filter 520 which applies the set of frequency domain scaling factors $Q_k$ that causes the SCISF to adapt to the desired spectral response, as discussed above. The scaled signal is input to an inverse discrete Fourier transform 330, a parallel to serial converter 340 and a cyclic prefix adder 350, resulting in a scaled reference sequence $(x^*q)_k$. The scaled reference sequence is input to the LMS algorithm processor.

The output sequence $\{\hat{x}_k\}$ of the second pass through the SCISF 90 is compared (in signal comparator 205) to the reference sequence $(x^*q)_k$. As noted above, the received sequence $\{y_k\}$ passes through a delay 305 before being input to the SCISF 90 for the second pass. The delay 305 compensates for the processing delay in the demodulation/decoding chain and the encoding/modulation chain. The comparison results in an error signal $e_k$ that is input to the LMS algorithm processor 215. The training process determines coefficients for the SCISF 90 so that the output $\{\hat{x}_k\}$ matches the scaled reference sequence $(x^*q)_k$ as closely as possible in a least squares sense, i.e., the mean square error between the output and the reference sequence is minimized. The coefficients of the SCISF 90 then are updated to the coefficients determined in the training process.

In a third examplary embodiment, the system dynamically selects the length of the cyclic prefix (CP) to maximize data throughput for a communication channel having a particular noise profile. As discussed above, a CP is added to each symbol prior to transmission through the communication channel to reduce the effects of ISI. However, because the CP constitutes redundant data, increasing the length of the CP reduces the efficiency of the communication system. Hence, to maximize efficiency, the length of the CP must be as short as the noise characteristics of the communication channel permit.

For a DMT communication system with $M$ tones, the maximum sample rate $W$ (samples/second) for a particular channel depends, in part, on the available bandwidth and hardware limitations. The sample rate includes communication data and CP bits. For a CP length of $n_c$, the maximum symbol rate (which includes communication data, but not the CP) is $W/(2M + n_c)$.

Before determining the optimal CP length, the SCISF should be initially trained to the channel. However, a communication system need not have a SCISF to employ the CP optimization algorithm. It is noted that the SCISF coefficients determined during the training process do not depend on the CP length. The capacity of the sub-channel may be approximated as $\log(1+SNR_i)$ bits per second, so the number of bits per symbol is $\sum_i \log(1+SNR_i)$. For a CP length of $n_c$, the maximum bit rate is expressed as a function of the cyclic prefix as:

$$B_a(n_c) = \frac{W \sum_i \log(1 + SNR_i)}{2M + n_c} \tag{49}$$

The optimal CP length is determined by computing the maximum bit rate for a set of candidate values of CP length and finding the length that maximizes $B_a(n_c)$.

The signal to noise ratio $SNR_i$ of each subchannel is determined by measuring the received signal and noise power and computing the ratio of the two. The noise power $\gamma_i$ for the $i^{th}$ bin may be measured by transmitting a data communication sequence and computing the average of the squares of the errors measured at the output of the receiver DFT. The total received power (signal and noise) $\delta_i$ for the $i^{th}$ bin may be measured by computing the average of the squares of the outputs of the receiver DFT. The signal to noise ratio is determined from the expression: $\delta_i/\gamma_i = 1 + SNR_i$. Since the signal to noise ratio is determined in the receiver, the computed bit rate $B_a(n_c)$ must be transmitted back to the transmitter. The transmitter compares the bit rate to the values computed for other candidate CP lengths and selects the CP length $n_c$ with the highest maximum bit rate $B_a(n_c)$.

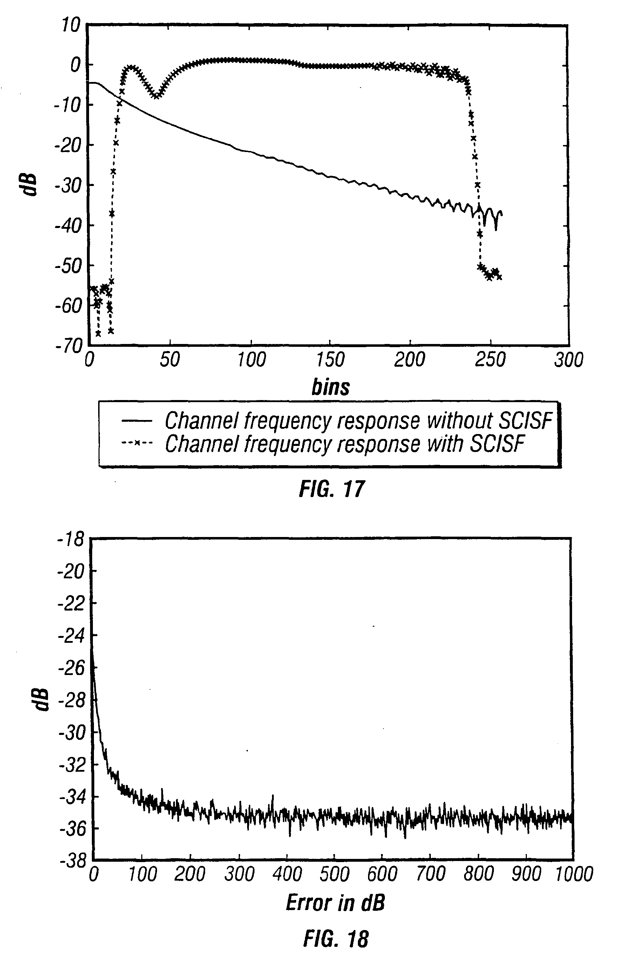

Figs. 17-24 show performance simulations for test systems based on system parameters and test loops described in HDSL Alliance SDMT VDSL Draft Standard Proposal, Technical report, ANSI, 1998; and Very-high-speed digital subscriber lines: System requirements, T1E1.4/97-131R1, Technical report, ANSI, 1997. The results are for a VDSL system working over test loops 2 and 6 of length 4500 feet in the upstream direction. The system has a sampling frequency of 11.04 MHz. Noise is generated by near-end cross talk from an interfering ADSL and an interfering HDSL and white noise at a level of -140 dBm. The SCISF used in the simulations is length-15 FIR. A version of the Normalized LMS algorithm is used to train the SCISF during an initial training period using a predetermined transmitted sequence.

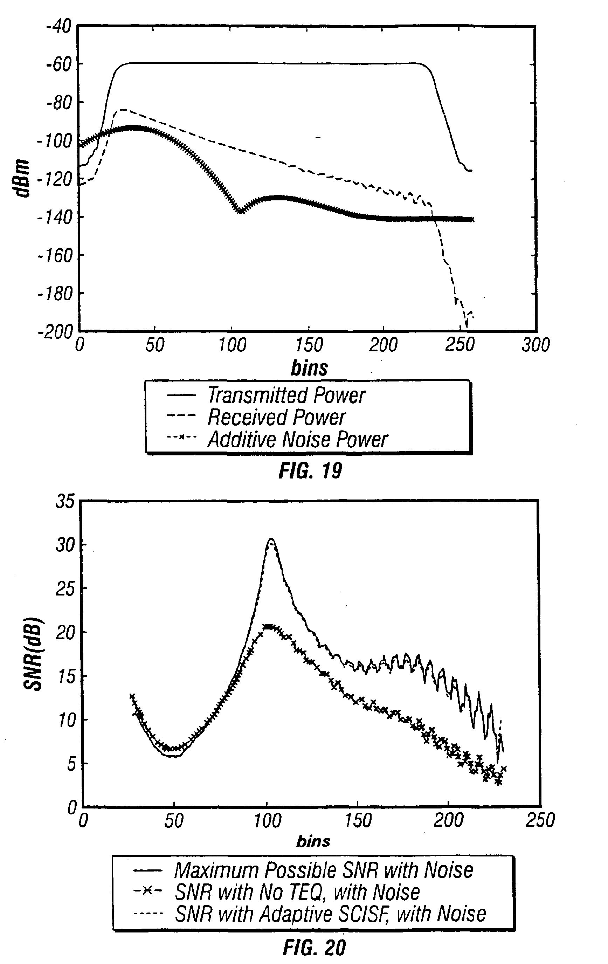

Figs. 17-20 show the simulated system performance for a communication system having the parameters defined for Test Loop 2, which is 4500 feet in length. Fig. 17 shows channel frequency response with and without a SCISF. The SCISF provides a much more uniform frequency response across the frequency band of interest and significantly improves the signal to noise ratio (SNR) in the higher frequency bins. Fig. 18 is a plot of the error signal (10 log $|\hat{x}_k - x_k|$) during the training process. The error decreases rapidly during the first few iterations and is nearly converged after only 20-30 iterations. Fig. 19 is a plot of transmitted power spectral density, received power spectral density and the additive noise power spectral density over the used subchannels at the output of the receiver A/D. Fig. 20 is a plot of SNR at the input to the receiver A/D, which is the maximum attainable SNR. The plot also shows the SNR at the output of the receiver DFT without a SCISF and the SNR at the outputs of the receiver DFT using an adapted SCISF.

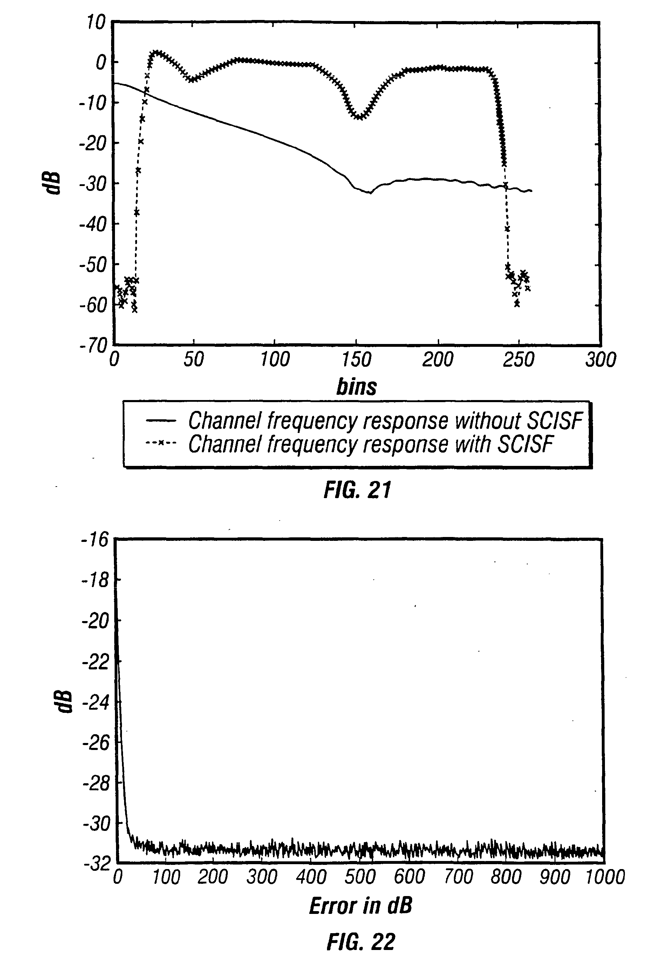

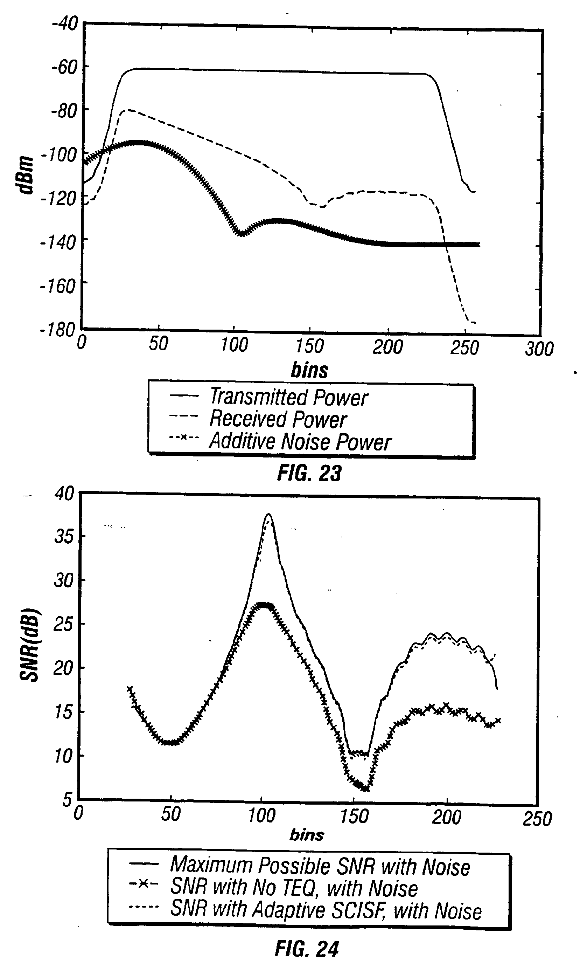

Figs. 21-24 show the simulated system performance for a communication system having the parameters defined for Test Loop 6, which is 4500 feet in length. Fig. 21 shows channel frequency response with and without a SCISF. Fig. 22 is a plot of the error signal (10 log $|\hat{x}_k - x_k|$) during the training process. Fig. 23 is a plot of transmitted power spectral density, received power spectral density and the additive noise power spectral density over the used subchannels at the output of the receiver A/D. Fig. 24 is a plot of SNR at the input to the receiver A/D. The plot also shows the SNR at the output of the receiver DFT without a SCISF and the SNR at the outputs of the receiver DFT using an adapted SCISF.

The embodiments of the invention are defined by the scope of the following claims.

## Claims

1. A method for equalizing a communication channel in a multi-channel multiple carrier communication system, the communication system including an impulse response shortening filter (90) having a desired spectral response which meets a specified spectral constraint and which is configured to receive a communication signal which has been transmitted over said communication channel, the method comprising measuring a noise power spectral density of the received communication signal, the method **characterized by**:

   computing the desired spectral response having a magnitude constraint based on the measured noise power spectral density;
   selecting a frequency response of said impulse response shortening filter (90) based on the desired spectral response; and
   filtering the received communication signal with the impulse response shortening filter (90).

2. The method of claim 1, wherein the communication system includes a discrete Fourier transform and the noise power spectral density is measured at an output of the discrete Fourier transform, or
   wherein the communication system includes a discrete cosine transform and the noise poser spectral density is measured at an output of the discrete cosine transform, or
   wherein the impulse response shortening filter is a time domain digital filter.

3. An impulse response shortening filter (90) for equalizing a channel in a multi-channel multiple carrier communication system, the communication system being configured to receive a communication signal which has been transmitted over said channel said channel having an impulse response, the filter comprising:

   an input connected to receive the communication signal;
   a digital filter structure configured to apply a frequency characteristic to the received communication signal, the frequency characteristic being determined by coefficients of the impulse response shortening filter, and
   filter coefficient inputs (94) connected to receive the filter coefficients being selected to shorten the impulse response of the at least one channel to confine a significant part of an energy of the impulse response of said channel to a region shorter than a target length and **characterized by** applying a frequency characteristic to the received communication signal based on a desired spectral response of said impulse response shortening filter having a magnitude constraint, the magnitude constraint being based on a measured noise power spectral density of the received communication signal.

**4.** The filter of claim 3, wherein the target length is a length of a cyclic prefix being employed in said communication signal.

**5.** The filter of claim 3, wherein the noise power spectral density is measured at an output of a discrete Fourier transform, or
wherein the desired spectral response is the inverse of the measured noise power spectral density.

**6.** A computer program embodied on a computer readable medium comprising instructions for causing a signal processor in a multi-channel multiple carrier communication system to perform the following operations:

measure a noise power spectral density of a received communication signal; and
compute a desired spectral response, **characterized by** the computed desired spectral response being based on the measured noise power spectral density of the received communication signal, the computed desired spectral response having a magnitude constraint based on the measured received noise power spectral density.

**7.** The computer program of claim 6, further comprising instructions for causing said processor to compute filter coefficients based on the desired spectral response.

**Patentansprüche**

**1.** Verfahren zum Abgleichen eines Datenübertragungskanals in einem Mehrkanal-Mehrträger-Datenübertragungssystem, wobei das Datenübertragungssystem ein Impulsantwort-Kürzungsfilter (90) mit einer gewünschten spektralen Antwort enthält, die eine spezifizierte spektrale Begrenzung einhält, und das dazu ausgelegt ist, ein Datenübertragungssignal, das über den Datenübertragungskanal übertragen wurde, zu empfangen, wobei das Verfahren das Messen einer spektralen Dichte der Störungsleistung des empfangenen Datenübertragungssignals umfasst, wobei das Verfahren **gekennzeichnet ist durch**:

Berechnen der gewünschten spektralen Antwort, die eine Größenbeschränkung auf der Grundlage der gemessenen spektralen Dichte der Störungsleistung aufweist;
Auswählen einer Frequenzantwort des Impulsantwort-Kürzungsfilters (90) anhand der gewünschten spektralen Antwort; und
Filtern des empfangenen Datenübertragungssignals mit dem Impulsantwort-Kürzungsfilter (90).

**2.** Verfahren nach Anspruch 1, wobei das Datenübertragungssystem eine diskrete Fourier-Transformation enthält und die spektrale Dichte der Störungsleistung an einem Ausgang der diskreten Fourier-Transformation gemessen wird, oder
wobei das Datenübertragungssystem eine diskrete Cosinus-Transformation enthält und die spektrale Dichte der Störungsleistung an einem Ausgang der diskreten Cosinus-Transformation gemessen wird, oder
wobei das Impulsantwort-Kürzungsfilter ein digitales Zeitbereichs-Filter ist.

**3.** Impulsantwort-Kürzungsfilter (90) zum Abgleichen eines Kanals in einem Mehrkanal-Mehrträger-Datenübertragungssystem, wobei das Datenübertragungssystem eingerichtet ist, um ein Datenübertragungssignal, das über den Kanal übertragen wurde, zu empfangen, wobei der Kanal eine Impulsantwort aufweist, wobei das Filter Folgendes umfasst:

einen Eingang, der angeschlossen ist, um das Datenübertragungssignal zu empfangen;
eine digitale Filterstruktur, die dazu ausgelegt ist, auf das empfangene Datenübertragungssignal eine Frequenzcharakteristik anzuwenden, wobei die Frequenzcharakteristik durch Koeffizienten des Impulsantwort-Kürzungsfilters bestimmt wird; und
Filterkoeffizienteneingänge (94), die angeschlossen sind, um die Filterkoeffizienten, die zum Kürzen der Impulsantwort des wenigstens einen Kanals ausgewählt wurden, zu empfangen, um einen signifikanten Teil einer Energie der Impulsantwort des Kanals auf einen Bereich zu beschränken, der kürzer als eine Solllänge ist, und **gekennzeichnet durch** Anwenden einer Frequenzcharakteristik auf das empfangene Datenübertragungssignal auf der Grundlage einer gewünschten spektralen Antwort des Impulsantwort-Kürzungsfilters, die eine Größenbegrenzung aufweist, wobei die Größenbegrenzung auf einer gemessenen spektralen Dichte der Störungsleistung des empfangenen Datenübertragungssignals beruht.

**4.** Filter nach Anspruch 3, wobei die Solllänge eine Länge eines zyklischen Präfix ist, der in dem Datenübertragungssignal verwendet wird.

**5.** Filter nach Anspruch 3, wobei die spektrale Dichte der Störungsleistung am Ausgang einer diskreten Fourier-Transformation gemessen wird, oder wobei die gewünschte spektrale Antwort das Inverse der gemessenen spektralen Dichte der Störungsleistung ist.

**6.** Computerprogramm, das auf einem computerlesbaren Medium ausgeführt wird, das Befehle umfasst, die bewirken, dass ein Prozessor in einem Mehrkanal-Mehrträger-Datenübertragungssystem die folgenden Operationen ausführt:

Messen einer spektralen Dichte der Störungsleistung eines empfangenen Datenübertragungssignals; und Berechnen einer gewünschten spektralen Antwort, **dadurch gekennzeichnet, dass** die berechnete spektrale Antwort auf der gemessenen spektralen Dichte der Störungsleistung des empfangenen Datenübertragungssignals beruht, wobei die berechnete spektrale Antwort eine Größenbegrenzung auf der Grundlage der gemessenen empfangenen spektralen Dichte der Störungsleistung aufweist.

**7.** Computerprogramm nach Anspruch 6, das ferner Befehle umfasst, um zu bewirken, dass der Prozessor Filterkoeffizienten auf der Grundlage der gewünschten spektralen Antwort berechnet.

**Revendications**

**1.** Procédé d'égalisation d'un canal de communication dans un système de communication à porteuses multiples canaux multiples, le système de communication comportant un filtre de raccourcissement de réponse impulsionnelle (90) ayant une réponse spectrale souhaitée qui satisfait une contrainte spectrale spécifiée et qui est configurée pour recevoir un signal de communication qui a été transmis sur ledit canal de communication, le procédé comprenant la mesure d'une densité spectrale de puissance de bruit du signal de communication reçu, le procédé étant **caractérisé par** :

le calcul de la réponse spectrale souhaitée ayant une contrainte de grandeur basée sur la densité spectrale de puissance de bruit mesurée ;
la sélection d'une réponse de fréquence dudit filtre de raccourcissement de réponse impulsionnelle (90) en fonction de la réponse spectrale souhaitée ; et
le filtrage du signal de communication reçu avec le filtre de raccourcissement de réponse impulsionnelle (90).

**2.** Procédé selon la revendication 1, dans lequel le système de communication comporte une transformée de Fourier discrète et la densité spectrale de puissance de bruit est mesurée à une sortie de la transformée de Fourier discrète ; ou
dans lequel le système de communication comporte une transformée en cosinus discret et la densité spectrale de puissance de bruit est mesurée à une sortie de la transformée en cosinus discret, ou
dans lequel le filtre de raccourcissement de réponse impulsionnelle est un filtre numérique dans le domaine temporel.

**3.** Filtre de raccourcissement de réponse impulsionnelle (90) pour égaliser un canal dans un système de communication à porteuses multiples canaux multiples, le système de communication étant configuré pour recevoir un signal de communication qui a été transmis sur ledit canal, ledit canal ayant une réponse impulsionnelle, le filtre comprenant :

une entrée connectée pour recevoir le signal de communication ;
une structure de filtre numérique configurée pour appliquer une caractéristique de fréquence au signal de communication reçu, la caractéristique de fréquence étant déterminée par des coefficients du filtre de raccourcissement de réponse impulsionnelle ; et
des entrées de coefficient de filtre (94) connectées pour recevoir les coefficients de filtre sélectionnés pour raccourcir la réponse impulsionnelle de l'au moins un canal afin de confiner une partie importante d'une énergie de la réponse impulsionnelle dudit canal à une région plus courte qu'une longueur cible et **caractérisé par** l'application d'une caractéristique de fréquence du signal de communication reçu en fonction d'une réponse spectrale souhaitée dudit filtre de raccourcissement de réponse impulsionnelle ayant une contrainte de grandeur, la contrainte de grandeur étant basée sur une densité spectrale de puissance de bruit mesurée du signal de communication reçu.

**4.** Filtre selon la revendication 3, dans lequel la longueur cible est une longueur d'un préfixe cyclique employé dans ledit signal de communication.

5. Filtre selon la revendication 3, dans lequel la densité spectrale de puissance de bruit est mesurée à une sortie d'une transformée de Fourier discrète ; ou
dans lequel la réponse spectrale souhaitée est l'inverse de la densité spectrale de puissance de bruit mesurée.

6. Programme informatique intégré dans un support lisible par ordinateur comprenant des instructions pour faire en sorte qu'un processeur de signaux dans un système de communication à porteuses multiples, canaux multiples exécute les opérations suivantes :

la mesure d'une densité spectrale de puissance de bruit d'un signal de communication reçu ; et
le calcul d'une réponse spectrale souhaitée, **caractérisé en ce que** la réponse spectrale souhaitée calculée est basée sur la densité spectrale de puissance de bruit mesurée du signal de communication reçu, la réponse spectrale souhaitée calculée ayant une contrainte de grandeur basée sur la densité spectrale de puissance de bruit reçue mesurée.

7. Programme informatique selon la revendication 6, comprenant en outre des instructions pour amener ledit processeur à calculer des coefficients de filtre en fonction de la réponse spectrale souhaitée.

INPUT DATA

ENCODER — 20

IDFT — 30

P/S — 40

ADD CP — 50

D/A — 60

TF — 65

10

12

TRANSMISSION CHANNEL — 70

14

RF — 75

A/D — 80

SCISF — 90

STRIP CP — 100

S/P — 110

DFT — 120

FEQ — 130

DECODER — 140

OUTPUT DATA

**FIG. 1**

**FIG. 2**

**FIG. 3**

FILTER
COEFF. INPUTS

94

90

INPUT → SCISF → OUTPUT

92

**FIG. 4**

FIG. 5

FIG. 6

**FIG. 7**

Desired Frequency Response of SCSIF
— — — Actual Frequency Response of SCSIF

**FIG. 8**

25

**FIG. 9**

*FIG. 10*

**FIG. 11**

INPUT FROM RECEIVE FILTER

A/D ⌐80

$y_k$

360 A

B

SCISF ⌐90

$\hat{x}_k'$

STRIP CP ⌐100

SERIAL TO PARALLEL ⌐110

DFT ⌐120

FEQ ⌐130

DECODER ⌐140

OUTPUT DATA

$\overline{A}$ ⌐370

DELAY ⌐305

B

$\hat{x}_k$

+ ⌐205

ADD CP ⌐350

PARALLEL TO SERIAL ⌐340

IDFT ⌐330

ENCODER ⌐320

LMS ALGORITHM

⌐215

**FIG. 12**

**FIG. 13**

**FIG. 14**

EP 1 068 704 B1

**FIG. 15**

EP 1 068 704 B1

**FIG. 16**

EP 1 068 704 B1

**FIG. 17**

**FIG. 18**

Transmitted Power
Received Power
Additive Noise Power

**FIG. 19**

Maximum Possible SNR with Noise
SNR with No TEQ, with Noise
SNR with Adaptive SCISF, with Noise

**FIG. 20**

— Channel frequency response without SCISF
-·-x-·- Channel frequency response with SCISF

**FIG. 21**

**FIG. 22**

**FIG. 23**

Legend:
- Transmitted Power
- --- Received Power
- -x- Additive Noise Power

**FIG. 24**

Legend:
- Maximum Possible SNR with Noise
- -x- SNR with No TEQ, with Noise
- ---- SNR with Adaptive SCISF, with Noise

REFERENCES CITED IN THE DESCRIPTION

**Patent documents cited in the description**

- EP 0768778 A1

- WO 9326096 A

**Non-patent literature cited in the description**

- **PROAKIS.** Digital Communications. McGraw Hill, 1989
- **CIMINI.** Analysis and Simulation of a Digital Mobile Channel using Orthogonal Frequency Division Multiplexing. *IEEE Transactions on communications,* July 1985, 665-675
- **CHOW.** A Discrete Multi-Tone Transceiver System for HDSL applications. *IEEE Journal on Selected Areas of Communications,* August 1991, vol. 9 (6), 895-908
- *Technical Report, T1E1.4/96-329R2, ANSI,* 1997
- **WORTHEN.** Simulation of VDSL Test Loops. *Technical Report T1E1.4/97-288,* 1997
- **CHOW, J. S. ; CIOFFI, J. M.** A Cost-effective Maximum Likelihood Receiver for Multicarrier Systems. *Proceedings of the ICC,* 1992

- **MELSA, PETER J.W. ; YOUNCE, RICHARD C. ; ROHRS, CHARLES E.** Optimal Impulse Response Shortening. *Proceedings of the thirtv-third Annual Allerton Conference on Communication. Control and Computing,* 1995, 431-438
- **HARIKUMAR, GOPAL ; MARCHOK, DANIEL.** Shortening the Channel Impulse Response of VDSL Loops for Multicarrier Applications. *Technical report T1E1.4197-289, ANSI,* 1997
- HDSL Alliance SDMT VDSL Draft Standard Proposal. *Technical report, ANSI,* 1998
- *Very-high-speed digital subscriber lines: System requirements, T1E1.4/97-131R1, Technical report, ANSI,* 1997